# EUROPEAN PATENT APPLICATION

(11) **EP 4 542 816 A1**
(43) Date of publication of application: **23.04.2025**
(21) Application number: 23850251.2
(22) Date of filing: 20.06.2023
(51) Int. Cl.: H02J 7/00, H01M 10/44

(54) **ELECTRONIC DEVICE AND METHOD FOR CHARGING BATTERIES BY ADJUSTING ELECTRICAL CONNECTION BETWEEN BATTERIES**

(30) Priority: 05.08.2022 KR 20220097810; 06.09.2022 KR 20220113097
(71) Applicant: Samsung Electronics Co., Ltd., Suwon-si, Gyeonggi-do 16677 (KR)
(72) Inventor: KIM, Sangsoon, Suwon-si, Gyeonggi-do 16677 (KR); NA, Hyoseok, Suwon-si, Gyeonggi-do 16677 (KR); YOO, Chul, Suwon-si, Gyeonggi-do 16677 (KR); LEE, Kanghwan, Suwon-si, Gyeonggi-do 16677 (KR); JU, Wanjae, Suwon-si, Gyeonggi-do 16677 (KR)
(74) Representative: Nederlandsch Octrooibureau
(86) International application number: PCT/KR2023/008560
(87) International publication number: WO 2024/029741

(57) **Abstract**

An electronic device, according to an embodiment, may comprise: an interface to be connected to a charger; a charging circuit connected to the interface through a first node; a PMIC connected to the charging circuit through a second node that is different from the fist node; and a switching circuit. The switching circuit may include a first switch for connecting an anode of a first battery cell and the first node to each other on the basis of a control signal from the processor. The switching circuit may include a diode including an anode connected to a cathode of the first battery cell, and a cathode connected to an anode of a second battery cell. The switching circuit may include a second switch for connecting the anode of the first battery cell and the second node to each other in another state different from a state in which the connection has been established by the first switch.

## Description

### [Technical Field]

The following descriptions relate to an electronic device and a method for charging batteries by adjusting an electrical connection between batteries.

### [Background Art]

An electronic device having mobility is being developed. In order to support the mobility, the electronic device may include a battery. The electronic device may include a power management integrated circuit (PMIC) for controlling charging and/or discharging of the battery.

### [Disclosure]

### [Technical Solution]

According to an embodiment, an electronic device may comprise an interface to be connected to a charger, charging circuitry connected to the interface through a first node, a power management integrated circuit (PMIC) connected to the charging circuitry through a second node different from the first node, a processor driven by a power provided from the PMIC, a plurality of battery cells, and switching circuitry, which is connected to the first node and the second node, to control an electrical connection of the plurality of the battery cells. The switching circuitry may comprise a first switch to establish an electrical connection between the first node, and an anode of a first battery cell among the plurality of battery cells, based on a control signal received from the processor. The switching circuitry may comprise a diode including an anode connected to a cathode of the first battery cell, and a cathode connected to an anode of a second battery cell among the plurality of battery cells. The switching circuitry may comprise a second switch to establish an electrical connection between the second node, and the anode of the first battery cell, in another state different from a state where the electrical connection of the first switch is established by the control signal.

According to an embodiment, an electronic device may comprise charging circuitry receiving a power signal from a charger different from the electronic device through a first node, a power management integrated circuit (PMIC) connected to the charging circuitry through a second node different from the first node, a plurality of battery cells, and switching circuitry, which is connected to the first node and the second node, to control an electrical connection of the plurality of the battery cells. The switching circuitry may comprise a first switch disposed between the first node, and an anode of a first battery cell among the plurality of battery cells, a plurality of second switches disposed between the second node, and anodes of the plurality of battery cells, and at least one diode connected to the battery cells, for sequential transmission of the power signal in the plurality of battery cells that is transmitted to the first battery cell through the first switch.

According to an embodiment, a method of an electronic device may comprise, based on a connection between the electronic device and a charger, identifying a type of the charger. The method may comprise, based on identifying the charger of a preset type supporting an exchange of power data, establishing a serial connection of a plurality of battery cells in the electronic device. The method may comprise, in a state in which the serial connection is established, transmitting the power data including a combination of voltages of the plurality of battery cells to the charger. The method may comprise, based on receiving a power signal having a voltage corresponding to the combination from the charger based on the power data, transmitting the power signal to the plurality of battery cells. The method may comprise, based on identification of another charger different from the preset type, establishing a parallel connection of the plurality of battery cells.

### [Description of the Drawings]

FIG. 1 is a block diagram of an electronic device in a network environment according to various embodiments.
FIG. 2 illustrates an example of a block diagram of an electronic device according to an embodiment.
FIG. 3A to FIG. 3B illustrate an example of switching circuitry and detection circuitry connected to a plurality of battery cells of an electronic device according to an embodiment.
FIG. 4A, FIG. 4B, FIG. 4C, and FIG. 4D illustrate different states of switching circuitry connected to a plurality of battery cells of an electronic device according to an embodiment.
FIG. 5 illustrates an example of switching circuitry connected to three battery cells of an electronic device according to an embodiment.
FIG. 6 illustrates an example of a plurality of battery cells disposed in a deformable housing of an electronic device according to an embodiment, and one or more circuitry connected to the plurality of battery cells.
FIG. 7 illustrates an example of a flowchart for describing an operation performed by an electronic device based on switching circuitry, according to an embodiment.
FIG. 8 illustrates an example of a flowchart for describing an operation performed by an electronic device based on switching circuitry, according to an embodiment.
FIG. 9 illustrates an example of a flowchart for describing an operation performed by an electronic device based on switching circuitry, according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

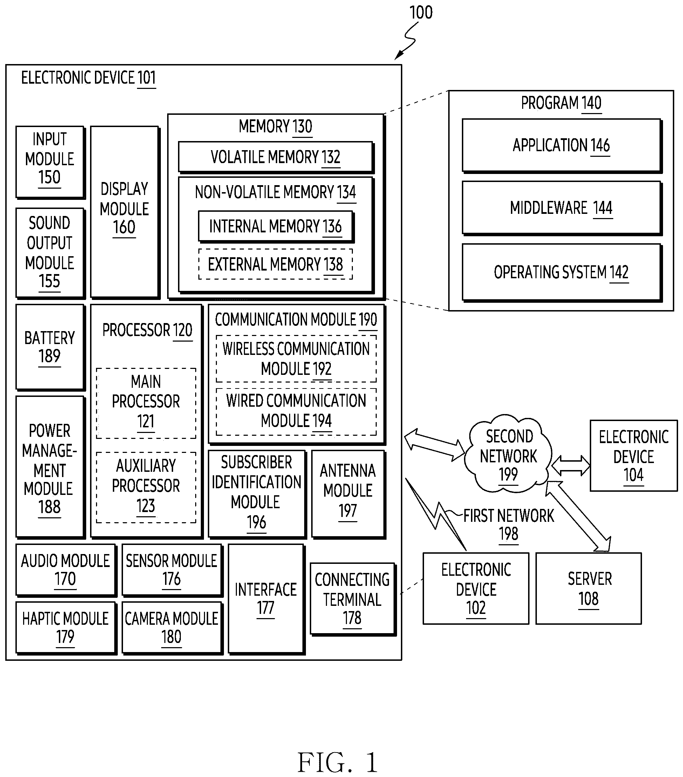

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

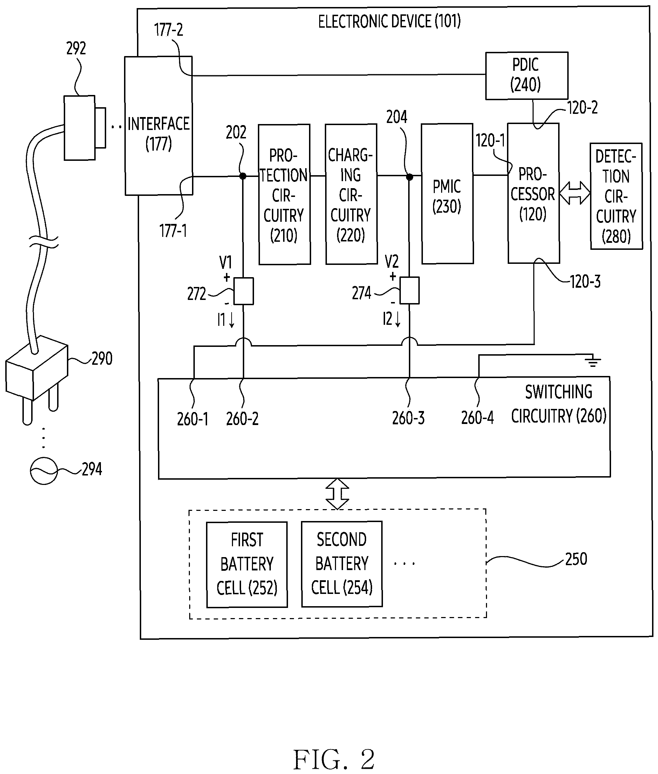

FIG. 2 illustrates an example of a block diagram of an electronic device 101 according to an embodiment. The electronic device 101 of FIG. 2 may be a terminal owned by a user. A terminal may include, for example, a personal computer (PC) such as a laptop or desktop, a smartphone, a smartpad, and/or a tablet PC. For example, the terminal may include a smart accessory such as a smartwatch and/or a head-mounted device (HMD). The electronic device 101 of FIG. 2 may be an example of the electronic device 101 of FIG. 1.

Referring to FIG. 2, according to an embodiment, the electronic device 101 may include at least one of an interface 177, protection circuitry 210, charging circuitry 220, a power management integrated circuit (PMIC) 230, a processor 120, a power delivery integrated circuit (PDIC) 240, a plurality of battery cells 250, switching circuitry 260, or detection circuitry 280. A type and/or the number of a hardware component included in the electronic device 101 is not limited as illustrated in FIG. 2. For example, the electronic device 101 may include only a portion of a hardware component illustrated in FIG. 2.

According to an embodiment, the processor 120 of the electronic device 101 may include a hardware component for processing data based on one or more instructions. The hardware component for processing data may include, for example, an arithmetic and logic unit (ALU), a floating point unit (FPU), a field programmable gate array (FPGA), and/or a central processing unit (CPU). The number of the processor 120 may be one or more. For example, the processor 120 may have a structure of a multi-core processor such as a dual core, a quad core, or a hexa core. Hardware and/or circuitry of the electronic device 101 illustrated by different blocks of FIG. 2 may be disposed in the electronic device 101 to obtain an electric power for an operation of the processor 120.

Referring to FIG. 2, an electric power for an operation of the processor 120 and/or the electronic device 101 may be received from the plurality of battery cells 250 and/or the interface 177 included in the electronic device 101. The plurality of battery cells 250, such as a first battery cell 252 and a second battery cell 254, may output electrical energy from chemical energy to be consumed in other circuitry and/or hardware components in the electronic device 101. For example, the plurality of battery cells 250 may be packaged in a different battery pack, or may be included in a single battery pack. Each of the plurality of battery cells 250 may include circuitry (e.g., a protection circuit module) that controls an electrical connection of a battery cell to prevent overcharging and/or overdischarging. The battery cell 250 may include a capacitor or a secondary battery that stores an electric power by charging. For example, the secondary battery may be any one of a lithium ion battery (Li-ion), a lithium ion polymer battery (Li-ion polymer), a lead storage battery, a nickel-cadmium battery (NiCd), and a nickel metal hydride battery (NiMH).

Referring to FIG. 2, according to an embodiment, the electronic device 101 may include the interface 177 for establishing an electrical connection between the electronic device 101 and an external electronic device. The interface 177 of FIG. 2 may include the interface 177 of FIG. 1. The interface 177 may identify the external electronic device connected by wire through the interface 177, based on a protocol based on a wired connection such as a universal serial bus (USB). According to an embodiment, the electronic device 101, in a state in which the external electronic device is connected through the interface 177, may receive an electric power for driving the electronic device 101 and/or the processor 120, or may execute various functions for exchanging information between the processor 120 and the external electronic device.

Referring to FIG. 2, as an example of the external electronic device that may be connected to the electronic device 101 through the interface 177, a charger 290 is illustrated. For example, the charger 290 may include a plug and/or a port for receiving electrical energy from a distribution system, such as a concentric plug 294. For example, the charger 290 may be connected to the interface 177 through a connector 292 different from a plug connected to the concentric plug 294. The charger 290 may obtain a power signal (e.g., a power signal of a direct current (DC) voltage) to be outputted to the interface 177 through the connector 292 based on an alternate current (AC) power received through the concentric plug 294. A function supported by the charger 290 may differ according to a type of the charger 290. For example, the charger 290 may support a function (e.g., an augmented power data object (APDO) function) that adjusts a voltage and/or a current of a power signal to be outputted to the interface 177 based on power data received from the electronic device 101 and/or the processor 120 through the interface 177. For example, the charger 290 supporting the function may be referred to as a power delivery (PD) charger.

According to an embodiment, a function of adjusting a voltage and/or a current of a power signal based on power data exchanged between the electronic device 101 and the charger 290 may be supported based on a wired connection standard such as USB 3.0. For example, the electronic device 101 may transmit an electrical signal including the power data to the charger 290, based on a specific channel (e.g., a configuration channel (CC)) and/or a specific pin of the interface 177. For example, the electronic device 101 may transmit an electrical signal to the charger 290 through the interface 177 to identify a type of charger 290 or whether the function is supported. The electronic device 101 may transmit power data for adjusting a voltage and/or a current of a power signal, based on receiving an electrical signal indicating support for the function from the charger 290 through the interface 177. Referring to FIG. 2, the electronic device 101 according to an embodiment may include the PDIC 240, which is circuitry for supporting an exchange of the power data between the processor 120 and the charger 290. The PDIC 240 may be connected to an end 120-2 of the processor 120 and may be connected to an end 177-2 of the interface 177.

According to an embodiment, the processor 120 of the electronic device 101 may charge the plurality of battery cells 250 based on at least a portion of electric power provided through the interface 177. Referring to FIG. 2, one or more circuitry for driving the processor 120 and/or charging the plurality of battery cells 250 are illustrated based on different blocks. The electronic device 101 may include a first node 202 connected to an end 177-1 of the interface 177 and to which a power signal received from the charger 290 is applied. Hereinafter, a node may be a portion of circuitry connecting circuit elements to each other, and may mean a portion where a potential difference does not exist substantially. For example, the node may correspond to a conducting wire in the circuitry connecting the circuit elements.

Referring to FIG. 2, the electronic device 101 may include the protection circuitry 210 for protecting circuitry included in the electronic device 101 from a sudden change in a power signal applied to the first node 202. For example, the sudden change in the power signal may be caused by a surge voltage. The electronic device 101 may include the charging circuitry 220 for receiving a power signal applied to the first node 202. The charging circuitry 220 may apply a DC voltage based on the power signal to a second node 204 different from the first node 202. The electronic device 101 may include the power management integrated circuit (PMIC) 230 connected to the charging circuitry 220 through the second node 204. For example, the PMIC 230 may include the power management module 188 of FIG. 1. The PMIC 230 may generate a power signal transmitted to an end 120-1 of the processor 120 based on a DC voltage applied to the second node 204. For example, the processor 120 may be activated based on the power signal received from the PMIC 230 through the end 120-1.

An exemplary state in which the PMIC 230 transmits the power signal for driving the processor 120 is illustrated, but an embodiment is not limited thereto. The PMIC 230 may provide a power signal for driving other hardware (e.g., a multi chip package (MCP) including other circuitry such as the communication module 190, the antenna module 197, the memory 130, and the display module 160 of FIG. 1) included in the electronic device 101. Referring to FIG. 2, a power signal provided from the charger 290 through the interface 177 may be applied to the processor 120 after being sequentially controlled by, for example, the protection circuitry 210, the charging circuitry 220, and the PMIC 230.

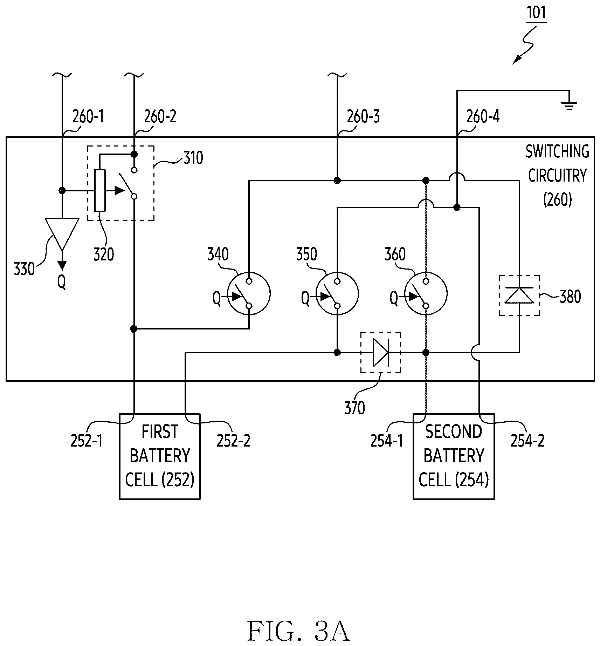

According to an embodiment, the electronic device 101 may operate based on electrical energy charged in the plurality of battery cells 250. For example, hardware in the electronic device 101 different from the plurality of battery cells 250 may obtain electric power from the plurality of battery cells 250, in a state in which the connector 292 of the charger 290 is separated from the interface 177. According to an embodiment, the electronic device 101 may include the switching circuitry 260 for controlling an electrical connection of the plurality of battery cells 250. Referring to FIG. 2, the switching circuitry 260 may be connected to the first node 202 and the second node 204. An example of a structure of the switching circuitry 260 for controlling the electrical connection of the plurality of battery cells 250 will be described with reference to FIG. 3A.

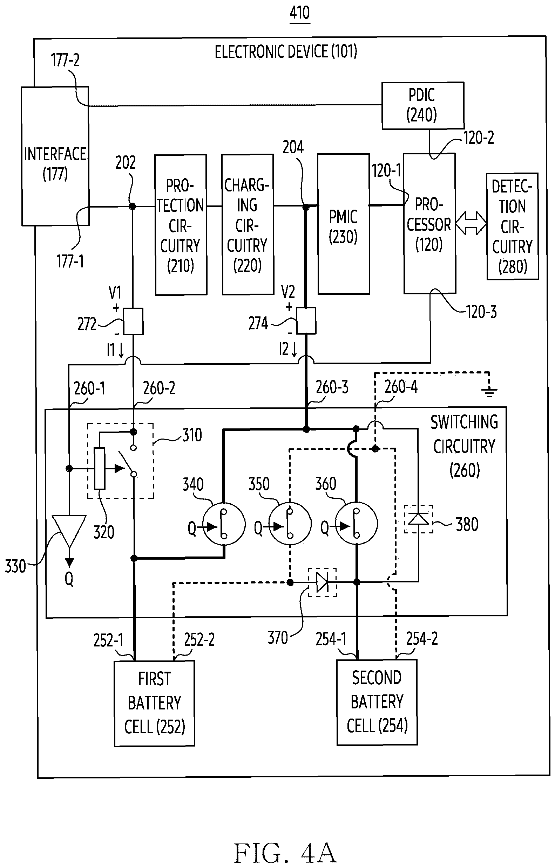

Referring to FIG. 2, an example of an electrical connection between the switching circuitry 260 and circuitry in the electronic device 101 is illustrated. Different examples of an electrical connection between the switching circuitry 260 and the battery cells 250 will be described with reference to FIG. 4A to FIG. 4D, FIG. 5, and/or FIG. 6. The switching circuitry 260 may include a first end 260-1 connected to an end 120-3 of the processor 120. For example, the first end 260-1 of the switching circuitry 260 may be referred to as a control terminal of the switching circuitry 260. The control terminal may be connected to the processor 120 to receive a control signal for controlling charging speed of the battery cells 250. The switching circuitry 260 may include a second end 260-2 connected to the first node 202 between the interface 177 and the charging circuitry 220 (or the protection circuitry 210). The switching circuitry 260 may receive a power signal received from the interface 177 independently of the charging circuitry 220, through the second end 260-2. The second end 260-2 may be referred to as an input terminal for receiving a power signal provided from a specific type of the charger 290, such as a PD charger. The switching circuitry 260 may include a third end 260-3 connected to the second node 204 between the charging circuitry 220 and the PMIC 230. The third end 260-3 of the switching circuitry 260 may be referred to as an output terminal for outputting a DC voltage of a preset range required for driving the PMIC 230. The switching circuitry 260 may include a fourth end 260-4 connected to a ground node in the electronic device 101. The fourth end 260-4 may be connected to the ground node for grounding circuitry included in the switching circuitry 260. For example, the ground node connected to the fourth end 260-4 may be an analog ground among the analog ground or a digital ground included in the electronic device 101. However, an embodiment is not limited thereto.

According to an embodiment, the processor 120 of the electronic device 101 may transmit a control signal to the switching circuitry 260. The control signal may be associated with at least one of a connection between the interface 177 and the charger 290, a type of the charger 290, or information obtained through the detection circuitry 280. The electronic device 101 may include the detection circuitry 280 for obtaining information required for generating a control signal of the processor 120. The electronic device 101 may include a first resistor 272 used to obtain the information of the detection circuitry 280, and disposed between the first node 202 and the second end 260-2 of the switching circuitry 260. The electronic device 101 may include a second resistor 274 used to obtain the information of the detection circuitry 280, and disposed between the second node 204 and the third end 260-3 of the switching circuitry 260. For example, the first resistor 272 and/or the second resistor 274 may have a relatively low resistance (e.g., a resistance of approximately 0.005 Ω, or less) to reduce deformation of a voltage and/or a current.

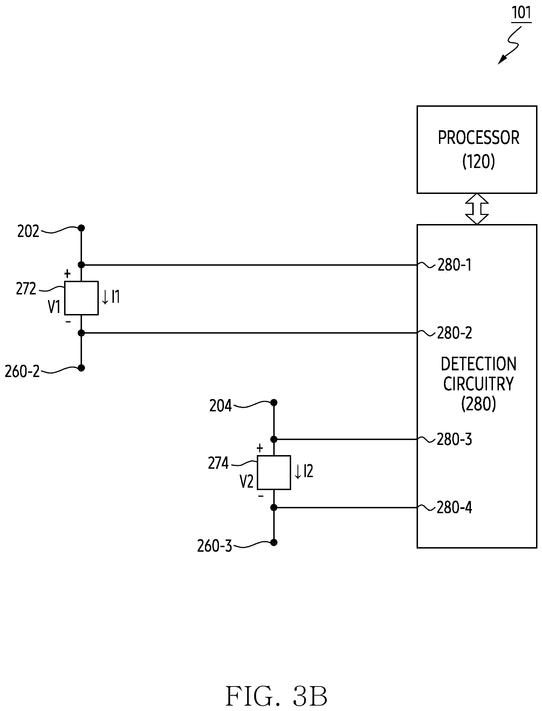

In an embodiment, the detection circuitry 280 may identify a voltage and/or a current of a power signal inputted to the switching circuitry 260 through the first end 260-2 based on a voltage V1 between both ends of the first resistor 272 and/or a current I1 of the first resistor 272. The detection circuitry 280 may identify a flow and/or a direction of a current between the second end 204 and the third end 260-3 of the switching circuitry 260, based on a voltage V2 between both ends of the second resistor 274 and/or a current I2 of the second resistor 274. The detection circuitry 280 may transmit a digital signal indicating the voltages V1 and V2, the currents I1 and I2, or a combination thereof to the processor 120. The detection circuitry 280 may include an analog-digital converter (ADC) for obtaining the digital signal. An example of a structure of the detection circuitry 280, the first resistor 272, and the second resistor 274 will be described with reference to FIG. 3B.

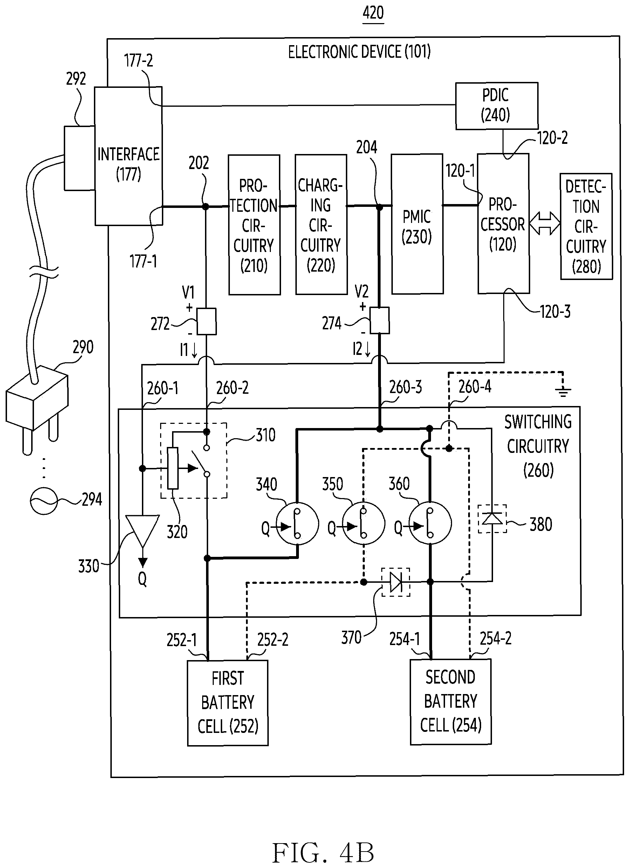

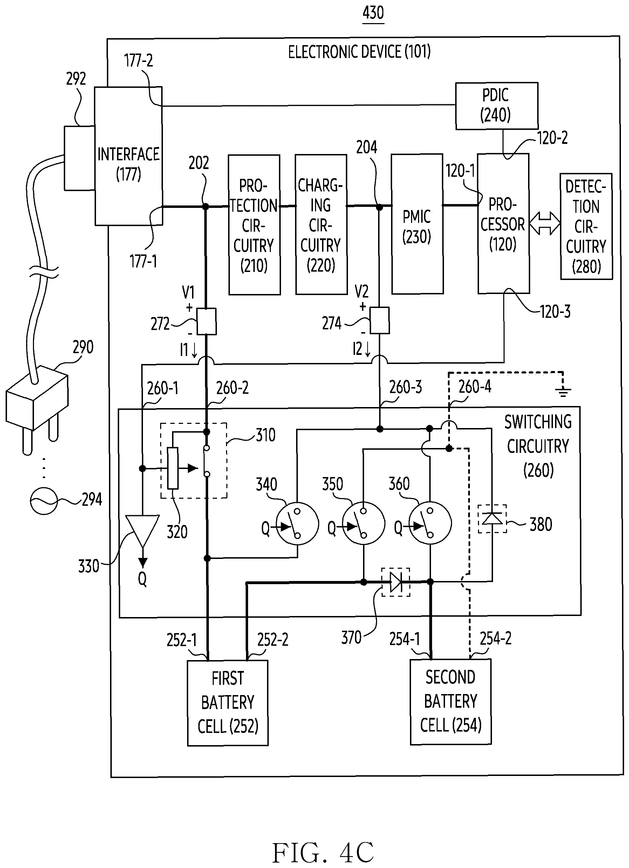

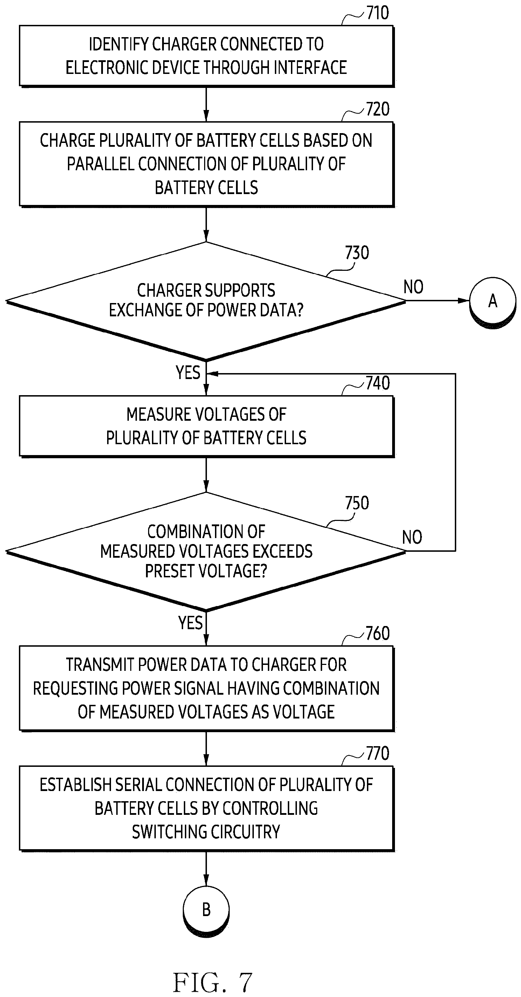

According to an embodiment, the processor 120 may transmit a control signal for controlling an electrical connection of the plurality of battery cells 250 established by the switching circuitry 260 to an end 260-1 of the switching circuitry 260. For example, the processor 120 may transmit the control signal for establishing any one of a serial connection or a parallel connection of the plurality of battery cells 250 to the first end 260-1 of the switching circuitry 260. A state in which the processor transmits the control signal for establishing the parallel connection may include a state (e.g., a state 410 to be described later with reference to FIG. 4A) of obtaining a power signal from the plurality of battery cells 250 based on a discharge of the plurality of battery cells 250. For example, the state in which the processor transmits the control signal for establishing the parallel connection may include a state (e.g., a state 420 of FIG. 4B) in which the charger 290, which is not the PD charger, and the interface 177 are connected. For example, the state in which the processor transmits the control signal for establishing the serial connection may include a state (e.g., a state 430 of FIG. 4C) in which the charger 290, which is the PD charger, is connected. An operation performed by the processor 120 to transmit a control signal will be described with reference to FIG. 7 to FIG. 9.

As described above, the processor 120 of the electronic device 101 according to an embodiment may establish a suitable connection for charging or discharging the plurality of battery cells 250 by using the switching circuitry 260. For example, the processor 120 may establish a serial connection of the plurality of battery cells 250 by using the switching circuitry 260, in order to charge the plurality of battery cells 250 at relatively high speed using the charger 290, which is the PD charger. While charging the plurality of battery cells 250 at relatively high speed using the charger 290, which is the PD charger, based on a connection of the switching circuitry 260 established by the processor 120, the plurality of battery cells 250 may obtain a power signal from the charger 290 through the first node 202 independently of circuitry in the electronic device 101, such as the charging circuitry 220 and/or a voltage divider. Since the plurality of battery cells 250 are charged independently of the circuitry in the electronic device 101 such as the charging circuitry 220 and/or the voltage divider, charging efficiency of the plurality of battery cells 250 may increase or noise may be reduced.

Hereinafter, an example of a structure of the switching circuitry 260 and the plurality of battery cells 250 in the electronic device 101 and a structure of the detection circuitry 280 will be described with reference to FIG. 3A to FIG. 3B.

FIG. 3A to FIG. 3B illustrate an example of switching circuitry 260 and detection circuitry 280 connected to a plurality of battery cells (e.g., a first battery cells 252 and a second battery cells 254) of an electronic device 101 according to an embodiment. The electronic device 101 of FIG. 3A to FIG. 3B may be an example of the electronic device 101 of FIG. 1 to FIG. 2. For example, the electronic device 101 and the switching circuitry 260 of FIG. 2 may include the electronic device 101 and the switching circuitry 260 of FIG. 3A. A first end 260-1 to a fourth end 260-4 of the switching circuitry 260 of FIG. 3A may correspond to the first end 260-1 to the fourth end 260-4 of FIG. 2. For example, the first end 260-1 of the switching circuitry 260 may be connected to the end 120-3 of the processor 120 of FIG. 2. A second end 260-2 of the switching circuitry 260 may be connected to the first node 202 of FIG. 2. A first resistor 272 for measuring a current flowing between the second end 260-2 and the first node 202 may be disposed between the second end 260-2 and the first node 202. A third end 260-3 of the switching circuitry 260 may be connected to the second node 204 of FIG. 2. The fourth end 260-4 of the switching circuitry 260 may be grounded. Referring to FIG. 3A, the electronic device 101 according to an embodiment may include two battery cells (e.g., the first battery cell 252 and the second battery cell 254) and the switching circuitry 260 for establishing an electrical connection between the two battery cells. The number of battery cells included in the electronic device 101 is not limited to an embodiment of FIG. 3A.

Referring to FIG. 3A, the switching circuitry 260 may include a first switch 310 for establishing an electrical connection between an anode 252-1 of the first battery cell 252 and the second end 260-2 based on a control signal received through the first end 260-1. The switching circuitry 260 may include protection circuitry 320 for adjusting the electrical connection of the first switch 310 based on a voltage and/or a current of a power signal (e.g., the power signal received through the first node 202 of FIG. 2) received through the second end 260-2. In an embodiment, the switching circuitry 260 may include at least one switch different from the first switch 310. For example, referring to FIG. 3A, a second switch 340, a third switch 350, and a fourth switch 360 are illustrated as an example of at least one switch that is different from the first switch 310. The number of switches included in the switching circuitry 260 is not limited to an embodiment of FIG. 3A.

According to an embodiment, the switching circuitry 260 in the electronic device 101 may include a voltage level shifter 330 for generating a control signal (e.g., a control signal, having a voltage, indicated by Q) to be transmitted to another switch (e.g., the second switch 340, the third switch 350, and the fourth switch 360) different from the first switch 310. The voltage level shifter 330 may be referred to as voltage level shift circuitry. The voltage level shifter 330 may output, from a control signal received from the first end 260-1, another control signal for controlling the other switch. For example, at least one of the first switch and the other switch may be synchronized, based on the control signal received through the first end 260-1 and another control signal adjusted by the voltage level shifter 330.

Referring to FIG. 3A, another switch different from the first switch 310 may electrically connect a cathode and an anode of each of the plurality of battery cells to the third end 260-3 and the fourth end 260-4 of the switching circuitry 260, based on a control signal Q of the voltage level shifter 330. For example, the second switch 340 may establish an electrical connection between the anode 252-1 of the first battery cell 252 and the third end 260-3 based on the control signal Q. The third switch 350 may establish an electrical connection between a cathode 252-2 of the first battery cell 252 and the fourth end 260-4 based on the control signal Q. The fourth switch 360 may establish an electrical connection between an anode 254-1 of the second battery cell 254 and the third end 260-3 based on the control signal Q.

According to an embodiment, the switching circuitry 260 in the electronic device 101 may include at least one diode connecting a cathode of a specific battery cell and an anode of another battery cell to form a serial connection of a plurality of battery cells. In an embodiment of FIG. 3A in which the switching circuitry 260 controls an electrical connection of two battery cells (e.g., the first battery cell 252 and the second battery cell 254), the switching circuitry 260 may include a diode 370 including an anode connected to the cathode 252-2 of the first battery cell 252 and a cathode connected to the anode 254-1 of the second battery cell 254. In a state in which the diode 370 is forward biased, a current may flow from the cathode 252-2 of the first battery cell 252 toward the anode 254-1 of the second battery cell 254.

In an embodiment in which a serial connection of a plurality of battery cells is formed by at least one diode of the switching circuitry 260, a cathode of a last battery cell of the serial connection may be directly connected to the fourth end 260-4. In an embodiment of FIG. 3A, in which a serial connection between the first battery cell 252 and the second battery cell 254 is formed by the diode 370, a cathode 254-2 of the second battery cell 254 may be connected to the fourth end 260-4. For example, the cathode 254-2 of the second battery cell 254 may be grounded. In an embodiment, the switching circuitry 260 may include a diode disposed between an anode of the last battery cell of the serial connection and the third end 260-3. For example, in an embodiment of FIG. 3A, the switching circuitry 260 may include a diode 380 including an anode connected to the anode 254-1 of the second battery cell 254 and a cathode connected to the third end 260-3.

In an embodiment, a switch (e.g., the first switch 310 to the fourth switch 360) included in the switching circuitry 260 may include a transistor. For example, the transistor may include a metal-oxide-semiconductor field-effect transistor (MOSFET), a metal-insulator-semiconductor FET (MISFET), and/or a bipolar junction transistor (BJT). For example, the first switch 310 may include an N-channel MOSFET. In the example in which the first switch 310 includes the N-channel MOSFET, the second switch 340 to the fourth switch 360 may include a P-channel MOSFET. In the example, based on a different operating region of the N-channel MOSFET and the P-channel MOSFET, a state of the first switch 310 and a state of the second switch 340 to the fourth switch 360 may operate opposite to each other. An embodiment is not limited to the example, and the first switch 310 may include the P-channel MOSFET, and another switch in the switching circuitry 260 different from the first switch 310 may include the N-channel MOSFET. In an embodiment, the diodes 370 and 380 in the switching circuitry 260 may include a PN junction diode and/or MOS diode.

Hereinafter, an operation of the switching circuitry 260 will be described based on an example of the switching circuitry 260 described above with reference to FIG. 3A. The switching circuitry 260 may receive a control signal from a processor (e.g., the processor 120 of FIG. 2) connected through the first end 260-1. Based on the first switch 310 controlled by the control signal, an electrical connection between the anode 252-1 of the first battery cell 252 and the second end 260-2 may be established. Since the second end 260-2 of the switching circuitry 260 is connected to the first node 202 connected to the interface 177 of FIG. 2, an electrical connection between the anode 252-1 of the first battery cell 252 and the first node 202 may be established by the electrical connection established by the first switch 310. Hereinafter, activation of a switch may mean that an electrical connection by the switch is established. For example, activation of the first switch 310 may mean that the electrical connection is established between the anode 252-1 of the first battery cell 252 and the first node 202.

According to an embodiment, in a state in which the first switch 310 is activated by the control signal received through the first end 260-1, the voltage level shifter 330 may generate a control signal Q for deactivating another switch, which is included in the switching circuitry 260 and is different from the first switch 310. For example, referring to FIG. 3A, in the state in which the first switch 310 is activated, the second switch 340, the third switch 350, and the fourth switch 360 may be deactivated based on the generated control signal Q. Deactivation of a switch, which is an opposite state in which the switch is activated, may mean that an electrical connection controlled by the switch is cut off. The voltage level shifter 330 may synchronize activation of the first switch 310 and deactivation of another switch. Similarly, the voltage level shifter 330 may synchronize deactivation of the first switch 310 and activation of another switch.

In another state in which the first switch 310 is deactivated by the control signal received through the first end 260-1, the voltage level shifter 330 may generate the control signal Q for activating another switch, which is different from the first switch 310, in the switching circuitry 260. Referring to FIG. 3A, in the other state in which the first switch 310 is deactivated, the electrical connection between the anode 252-1 of the first battery cell 252 and the third end 260-3 of the switching circuitry 260 may be established based on an activated second switch 340. Since the third end 260-3 is connected to the second node 204 of FIG. 2, an electrical connection between the anode 252-1 of the first battery cell 252 and the second node 204 may be established by the electrical connection established by the second switch 340. Similarly, in the other state, the electrical connection between the anode 254-1 of the second battery cell 254 and the third end 260-3 may be established by an activated fourth switch 360. In the other state, an electrical connection may be established between the anode 254-1 of the second battery cell 254 and the second node 204 of FIG. 2. In the other state, an electrical connection between the cathode 252-2 of the first battery cell 252 and the fourth node 260-4 may be established based on an activated third switch 350. For example, in the other state, the cathode 252-2 of the first battery cell 252 may be grounded.

As described above, in the state in which the first switch 310 is activated, the second switch 340 to the fourth switch 360 may be deactivated. In the state, a power signal inputted to the switching circuitry 260 through the second end 260-2 may be sequentially transmitted to the first battery cell 252, the diode 370, and the second battery cell 254. For example, in the state, a serial connection between the first battery cell 252 and the second battery cell 254 may be established by the switching circuitry 260. Meanwhile, the second switch 340 to the fourth switch 360 may be activated in the other state in which the first switch 310 is deactivated. In the other state, the anodes 252-1 and 254-1 of each of the first battery cell 252 and the second battery cell 254 may be connected in parallel to the third end 260-3 of the switching circuitry 260. Similarly, in the other state, the cathodes 252-2 and 254-2 of each of the first battery cell 252 and the second battery cell 254 may be connected in parallel to the fourth end 260-4 of the switching circuitry 260. For example, in the other state, a parallel connection of the first battery cell 252 and the second battery cell 254 may be established by the switching circuitry 260.

According to an embodiment, in a state in which the first switch 310 is activated by the control signal received through the first end 260-1, the protection circuitry 320 connected to the first switch 310 may reduce damage to a plurality of battery cells (e.g., the first battery cell 252 and/or the second battery cell 254) connected to the switching circuitry 260 from a power signal inputted to the switching circuitry 260 through the first switch 310. For example, in the state in which the first switch 310 is activated, since the serial connection of the first battery cell 252 and the second battery cell 254 is established, a combination of voltages of the first battery cell 252 and the second battery cell 254 may be applied to the first switch 310. In the example, the protection circuitry 260 may deactivate the first switch 310, based on identifying that a voltage exceeding a preset voltage range associated with the combination is applied to the second end 260-2 of the switching circuitry 260. Since the first switch 310 is deactivated, the voltage exceeding the preset range may be prevented from being applied to a plurality of battery cells such as the first battery cell 252 and the second battery cell 254. For example, the protection circuitry 320 may disconnect an electrical connection of the first switch 310 based on identifying that the voltage exceeding the preset voltage range is being applied to the plurality of battery cells.

In an embodiment, a preset voltage range of the protection circuitry 320 included in the switching circuitry 260 may be different from a voltage range of the protection circuitry 210 of FIG. 2. For example, the preset voltage range of the protection circuitry 320 may be formed based on a combination of voltages of the plurality of battery cells (e.g., the first battery cell 252 and/or the second battery cell 254). In the example, a preset voltage range of the protection circuitry 210 of FIG. 2 may be formed based on a DC voltage required to drive circuitry (e.g., the charging circuitry 220, the PMIC 230, and/or the processor 120) connected to the protection circuitry 210. For example, an upper bound of the preset voltage range of the protection circuitry 320 may be greater than an upper bound of the preset voltage range of the protection circuitry 210 of FIG. 2. Based on the protection circuitry 320, while the first switch 310 is activated, a voltage applied to the serial connection of the plurality of battery cells may be maintained as the voltage in the preset voltage range. A plurality of battery cells may be protected in a voltage range independent of other circuitry in the electronic device 101 different from the plurality of battery cells, based on the protection circuitry 320 of the switching circuitry 260.

As described above with reference to FIG. 3A, the switching circuitry 260 in the electronic device 101 according to an embodiment may include the first switch 310 disposed between the first node 202 of FIG. 2 and the anode 252-1 of the first battery cell 252. The switching circuitry 260 in the electronic device 101 may include a plurality of switches (e.g., the second switch 340 and/or the fourth switch 360) disposed between the second node 204 of FIG. 2, and anodes of a plurality of battery cells including the first battery cell 252. The switching circuitry 260 in the electronic device 101 may include at least one switch (e.g., the third switch 350) disposed between at least one cathode of the plurality of battery cells and a ground node. The first switch 310 and another switch different from the first switch 310 may be synchronized by the control signal received through the first end 260-1, in the switching circuitry 260. For example, activation of the first switch 310 and deactivation of the other switch may occur substantially simultaneously. For example, deactivation of the first switch 310 and activation of the other switch may occur substantially simultaneously.

According to an embodiment, the processor (e.g., the processor 120 of FIG. 2) of the electronic device 101 may transmit a control signal to the first end 260-1 of the switching circuitry 260 based on a charging current and/or a discharging current flowing to the second end 260-2 and/or the third end 260-3. Referring to FIG. 3B, an example of the detection circuitry 280 for transmitting information associated with the second end 260-2 and/or the third end 260-3 of the switching circuitry 260 to the processor 120 of the electronic device 101 according to an embodiment is illustrated. The processor 120 and the detection circuitry 280 of FIG. 2 may include the processor 120 and the detection circuitry 280 of FIG. 3B. The first node 202 and the second node 204 of FIG. 2 may correspond to the first node 202 and the second node 204 of FIG. 3B. The second end 260-2 and the third end 260-3 of the switching circuitry 260 of FIG. 2 may correspond to the second end 260-2 and the third end 260-3 of FIG. 3.

The first resistor 272 and the second resistor 274 of FIG. 3B may correspond to the first resistor 272 and the second resistor 274 of FIG. 2. The first resistor 272 may include an end connected to the first node 202 and another end connected to the second end 260-2. The other end of the first resistor 272 may be connected to the first switch 310 of FIG. 3A through the second end 260-2. The second resistor 274 may include an end connected to the second node 204 and another end connected to the third end 260-3.

According to an embodiment, the detection circuitry 280 may identify at least one of the voltages V1 and V2 and/or the currents I1 and I2 of the first resistor 272 and/or the second resistor 274. In order to measure the voltage V1 and/or the current I1 of the first resistor 272, the detection circuitry 280 may include both ends 280-1 and 280-2 connected to each of both ends of the first resistor 272. In order to measure the voltage V2 and/or the current I2 of the second resistor 274, the detection circuitry 280 may include both ends 280-3 and 280-4 connected to each of both ends of the second resistor 274. An embodiment in which the detection circuitry 280 is connected to both the first resistor 272 and the second resistor 274 is illustrated, but an embodiment is not limited thereto. For example, the detection circuitry 280 may be selectively connected to any one of the first resistor 272 or the second resistor 274.

According to an embodiment, the detection circuitry 280 in the electronic device 101 may transmit information including at least one of the voltages V1 and V2 and/or the currents I1 and I2 of the first resistor 272 and/or the second resistor 274 to the processor 120. For example, the detection circuitry 280 may identify the voltage V1 between the both ends 280-1 and 280-2. The detection circuitry 280 may identify the current I1 applied to the first resistor 272 from an identified voltage V1 based on a preset resistance value of the first resistor 272 and Ohm's law. Similarly, the detection circuitry 280 may identify the voltage V2 and/or the current I2 of the second resistor 274 based on the voltage V2 between the both ends 280-3 and 280-4. The detection circuitry 280 may include an ADC for generating a digital signal readable by the processor 120. For example, the detection circuitry 280 may be referred to as fuel gauge circuitry.

According to an embodiment, the processor 120 connected to the detection circuitry 280 may identify a charge amount of a plurality of battery cells based on information transmitted from the detection circuitry 280. In an embodiment, based on identifying a current flowing from the second node 202 to the second end 260-2 of the switching circuitry 260 using the first resistor 272, the processor 120 may obtain the charge amount of the plurality of battery cells based on the current and the number of the plurality of battery cells. For example, the charge amount may be a multiplication of the current, the number, and duration for which the current flows. The processor 120 may adjust a control signal for controlling the switching circuitry 260 based on the information and/or the charge amount. The processor 120 may adjust a power signal outputted from a charger (e.g., the charger 290 of FIG. 2) connected to the electronic device 101 based on the information and/or the charge amount.

Hereinafter, an operation in which the processor 120 in the electronic device 101 adjusts a control signal according to an embodiment will be described with reference to FIG. 4A to FIG. 4D.

FIG. 4A to FIG. 4D illustrate different states 410, 420, 430, and 440 of switching circuitry 260 connected to a plurality of battery cells of an electronic device 101 according to an embodiment. The electronic device 101 of FIG. 4A to FIG. 4D may be an example of the electronic device 101 of FIG. 1 to FIG. 2. For example, the electronic device 101, the interface 177, the protection circuitry 210, the charging circuitry 220, the PMIC 230, the processor 120, the PDIC 240, the switching circuitry 260, the first resistor 272, the second resistor 274, or the detection circuitry 280 of FIG. 2 may include the electronic device 101, an interface 177, protection circuitry 210, charging circuitry 220, a PMIC 230, a processor 120, a PDIC 240, the switching circuitry 260, a first resistor 272, a second resistor 274, or detection circuitry 280 of FIG. 4A to FIG. 4D. The switching circuitry 260 of FIG. 4A to FIG. 4D, similar to the switching circuitry 260 of FIG. 3A, may control an electrical connection between two battery cells (e.g., a first battery cell 252 and a second battery cell 254).

According to an embodiment, the processor 120 in the electronic device 101 may control switches (e.g., a first switch 310, a second switch 340, a third switch 350, and/or a fourth switch 360) in the switching circuitry 260 based on at least one of a connection between the electronic device 101 and a charger (e.g., the charger 290 of FIG. 2), or a type of the charger. States 420, 430, and 440 of FIG. 4B to FIG. 4D may be included in a state in which the processor 120 identifies the connection between the electronic device 101 and the charger. A state 410 of FIG. 4A may be included in a state in which the processor 120 identifies a separation of the electronic device 101 and the charger. In the state 410, the electronic device 101 may obtain electrical energy based on a plurality of battery cells. For example, in the state 410, the plurality of battery cells may be discharged.

As in the state 410 of FIG. 4A, while not receiving a power signal through the interface 177, the processor 120 may transmit a control signal for establishing a parallel connection of a plurality of battery cells 250 to the switching circuitry 260 by using the switching circuitry 260. Referring to FIG. 4A, the second switch 340, the third switch 350, or the fourth switch 360 in the switching circuitry 260 may be activated based on a control signal for establishing the parallel connection of the plurality of battery cells 250. The first switch 310 in the switching circuitry 260 may be deactivated based on the control signal for establishing the parallel connection.

In the state 410 of FIG. 4A in which a plurality of battery cells (e.g., the first battery cell 252 and the second battery cell 254) are discharged, a plurality of switches (e.g., the second switch 340 and the fourth switch 360) disposed between anodes 252-1 and 254-1 of the plurality of battery cells and a third end 260-3 of the switching circuitry 260 may be activated. Meanwhile, at least one switch (e.g., the third switch 350) disposed between cathodes 252-2 and 254-2 of the plurality of battery cells and a fourth end 260-4 of the switching circuitry 260 may be activated. For example, the anodes 252-1 and 254-1 and the cathodes 252-2 and 254-2 of the plurality of battery cells may be electrically connected to the third end 260-3 and the fourth end 260-4 of the switching circuitry 260, respectively. Referring to FIG. 4A, a parallel connection of a plurality of battery cells may be formed between the third end 260-3 and the fourth end 260-4 of the switching circuitry 260.

In the state 410 of FIG. 4A in which a plurality of battery cells (e.g., the first battery cell 252 and the second battery cell 254) are connected in parallel, a power signal based on the parallel connection may be transmitted to the PMIC 230 through the third end 260-3 of the switching circuitry 260 and a second node 204. For example, a voltage of each of the plurality of battery cells may be applied to the second node 204. Circuitry (e.g., the protection circuitry 210, and/or the charging circuitry 220) between the second node 204 and the interface 177 may be at least temporarily deactivated in the state 410. The PMIC 230 may apply a preset DC voltage to an end 120-1 of the processor 120 based on the power signal received through the second node 204. While the power signal is transmitted to the PMIC 230, the plurality of battery cells 250 may be discharged. According to an embodiment, the processor 120 of the electronic device 101, in the state 410, may identify a voltage V2 and/or a current I2 of the second resistor 274 by using the detection circuitry 280. The second resistor 274 may be used to obtain information associated with a discharge of the plurality of battery cells in the state 410. The electronic device 101 may identify a state of charge (SOC) (or a charging state) of the plurality of battery cells based on the voltage V2 and/or the current I2. For example, the SOC may be displayed in a display of the electronic device 101 in a format of a numerical value in % units.

In an embodiment, as a charger (e.g., the charger 290 of FIG. 2) is connected to the interface 177, a power signal outputted from the charger may be transmitted to the electronic device 101 through the interface 177. The power signal may be applied to the first node 202 in the electronic device 101 through an end 177-1 of the interface 177. The power signal applied to the first node 202 may be sequentially transmitted to the protection circuitry 210 and the charging circuitry 220 and transmitted to the PMIC 230. The processor 120 of the electronic device 101 may identify the power signal applied to the first node 202 by using the first resistor 272. Based on identifying a change in a voltage and/or a current of the second resistor 274 due to a power signal outputted from the charging circuitry 220 to the second node 204, the processor 120 may identify the power signal. The processor 120 may determine that the charger is connected to the interface 177 based on identifying the power signal.

Referring to FIG. 4B, an example of a state 420 in which the charger 290 is connected to the interface 177 is illustrated. The state 420 may include a state in which the charger 290 of a different type than a PD charger is connected. The state 420 may include a state before the processor 120 identifies the type of the charger 290 after the charger 290 is connected. The state 420 may include a preset state (e.g., a slow charging mode) for limiting speed at which the processor 120 charges a plurality of battery cells. The preset state for limiting the speed of charging the plurality of battery cells may include a state in which voltages of the plurality of battery cells have voltages different from a preset range (e.g., a preset range associated with a fast charging mode).

As in the state 420 of FIG. 4B, while receiving a power signal from the charger 290 of a different type than the PD charger, the processor 120 may transmit a control signal for establishing the parallel connection of the plurality of battery cells 250 to the switching circuitry 260 by using the switching circuitry 260. Based on the control signal, similar to the state 410 of FIG. 4A, the first switch 310 in the switching circuitry 260 may be deactivated, and another switch (e.g., the second switch 340 to the fourth switch 360) different from the first switch 310 may be activated. For example, the anodes 252-1 and 254-1 of the plurality of battery cells may be connected to the third end 260-3 of the switching circuitry 260. The cathodes 252-2 and 254-2 of the plurality of battery cells may be connected to the fourth end 260-4 of the switching circuitry 260. For example, all of the cathodes 252-2 and 254-2 of the plurality of battery cells may be grounded. Since the plurality of battery cells are connected in parallel in the state 420, a difference between a voltage of each of the plurality of battery cells (e.g., a voltage of an anode 252-1 of the first battery cell 252 and a voltage of an anode 254-1 of the second battery cell 254) may be adjusted to be reduced. For example, balancing of the battery cells may occur in the state 420.

In the state 420 of FIG. 4B, a power signal inputted from the charger 290 through the interface 177 may be applied to the second node 204 through the charging circuitry 220. The power signal applied to the second node 204 may be transmitted to the anodes 252-1 and 254-1 of the plurality of battery cells through the third end 260-3 of the switching circuitry 260. The power signal applied to the second node 204 may be used for driving the processor 120 by being transmitted to the PMIC 230. For example, in the state 420, the power signal inputted from the charger 290 may be divided into the switching circuitry 260 and the PMIC 230 in the second node 204.

In the state 420 of FIG. 4B, charging of the plurality of battery cells based on a parallel connection may be controlled by the charging circuitry 220. For example, the charging circuitry 220 may generate a flow of a current from the second node 204 to the anodes 252-1 and 254-1 of the plurality of battery cells by adjusting a voltage applied to the second node 204. Based on the current, the plurality of battery cells may be charged. The charging circuitry 220 may charge the plurality of battery cells connected in parallel based on a constant voltage. For example, the state 420 may include a state in which the plurality of battery cells are charged based on a voltage (e.g., the constant voltage) in a preset range.

According to an embodiment, the processor 120 of the electronic device 101 may transmit an electrical signal for identifying a type of the charger 290 to the charger 290 based on identifying the charger 290 connected through the interface 177. For example, the electrical signal may be generated from the PDIC 240 controlled by the processor 120. The electrical signal may be transmitted from the PDIC 240 to an end 177-2 of the interface 177. The electrical signal transmitted to the end 177-2 may be transmitted to the charger 290 through the interface 177. For example, the end 177-2 of the interface 177 may be included in a signal path, which is included in the interface 177 for an exchange of power data between the charger 290 and the electronic device 101, such as a CC pin. An electrical signal transmitted from the charger 290 through the interface 177 may be transmitted to the PDIC 240 through the end 177-2 of the interface 177. The processor 120 may identify the electrical signal transmitted from the charger 290 by using the PDIC 240. Based on the electrical signal transmitted from the charger 290, the processor 120 may identify a type of the charger 290.

Referring to FIG. 4C, an example of a state 430 in which the processor 120 identifies the charger 290 having a type corresponding to the PD charger is illustrated. The state 430 may include a state of receiving a power signal having a voltage greater than or equal to a combination of voltages of a plurality of battery cells by controlling the charger 290, which is the PD charger. The state 430 may include a preset state (e.g., a fast charging mode) for making the processor 120 to charge the plurality of battery cells relatively fast. The state 430 may include a state in which a current of the power signal provided from the charger 290, which is the PD charger, to the electronic device 101 is maintained at a constant current in a preset current range. For example, the state 430 may include a state in which the plurality of battery cells are charged based on a current (e.g., the constant current) in a preset range.

In the state 430 of FIG. 4C, the processor 120 may transmit a control signal for establishing a serial connection of the plurality of battery cells to the switching circuitry 260 by using the switching circuitry 260. For example, the processor 120 may transmit a control signal for establishing an electrical connection of the first switch 310 to the switching circuitry 260 based on identifying the charger 290, which is the PD charger, that supports an exchange of power data to adjust a voltage of a power signal. The first switch 310 in the switching circuitry 260 may be activated based on the control signal for establishing the serial connection. Based on the control signal for establishing the serial connection, another switch (e.g., the second switch 340, the third switch 350, and the fourth switch 360) different from the first switch 310 may be deactivated in the switching circuitry 260. Since the other switch includes the third end 260-3 of the switching circuitry 260 and a switch (e.g., the second switch 340 and the fourth switch 360) connecting anodes of the plurality of battery cells, a charge and/or a discharge of a plurality of battery cells based on the third end 260-3 of the switching circuitry 260 may cease in the state 430.

Since the first switch 310 is activated in the state 430 of FIG. 4C in which the serial connection between the plurality of battery cells (e.g., the first battery cell 252 and the second battery cell 254) is established, an electrical connection between the first node 202 and the anode 252-1 of the first battery cell 252 may be established. Based on the electrical connection, the power signal inputted from the charger 290 through the interface 177 may be sequentially transmitted to a second end 260-2 of the switching circuitry 260 and the anode 252-1 through the first node 202. For example, the power signal may be used for charging the plurality of battery cells, by being transmitted to the plurality of battery cells through the second end 260-2 of the switching circuitry 260. For example, in the state 430 of FIG. 4C, the power signal inputted from the charger 290 may be divided into each of the switching circuitry 260 and the protection circuitry 210 in the first node 202.

Since the power signal inputted from the charger 290 is divided into the switching circuitry 260 and the protection circuitry 210, respectively, in the first node 202, the plurality of battery cells may be charged independently of a voltage change (e.g., a voltage change of the second node 204) by the charging circuitry 220. In the state 430 of FIG. 4C, the charging circuitry 220 may apply a preset DC voltage required for driving hardware of the electronic device 101, such as the processor 120, to the second node 204. The preset DC voltage may be greater than a voltage of the second battery cell 254 in order to reduce a leakage current (e.g., a leakage current by a discharge of the second battery cell 254) by a second diode 380 in the state 430. For example, the second diode 380 may be reverse biased (or negative biased) based on the preset DC voltage. For example, the processor 120 may control the charging circuitry 220 to adjust a voltage of the second node 204 so that the second diode 380 is reverse biased. Based on deactivation of the reverse biased second diode 380 and another switch different from the first switch 310, the plurality of battery cells may be separated from other hardware of the electronic device 101.

Referring to FIG. 4C, a power signal divided into the second end 260-2 of the switching circuitry 260 in the first node 202 may be transmitted to the anode 252-1 of the first battery cell 252 among the plurality of battery cells connected in series through the first switch 310. For example, a power signal transmitted to the first battery cell 252 may be sequentially transmitted to the first battery cell 252, a diode 370, and the second battery cell 254. For example, by the diode 370, a power signal transmitted to the first battery cell 252 through the first switch 310 may be transmitted to the second battery cell 254 different from the first battery cell 252. Since the cathode 254-2 of the second battery cell 254 is grounded, a serial connection of the first battery cell 252, the diode 370, and the second battery cell 254 may be established from the second end 260-2 of the switching circuitry 260. For example, based on a control signal transmitted by the processor 120, the serial connection of the first battery cell 252, the diode 370, and the second battery cell 254 may be established in the state 430.

In the state 430 of FIG. 4C, in order to charge a plurality of battery cells connected in series, the processor 120 of the electronic device 101 may request the charger 290 connected to the electronic device 101 to transmit a power signal having a voltage greater than or equal to a combination of voltages of the plurality of battery cells. In the state 430, the processor 120 may identify at least one voltage among the plurality of battery cells by using the detection circuitry 280. Based on the at least one voltage, the processor 120 may generate power data to be transmitted to the charger 290 by using the PDIC 240. The power data may include, for example, data that causes the charger 290 to transmit the power signal having the voltage greater than or equal to the combination of voltages of the plurality of battery cells. In an embodiment of FIG. 4C in which the electronic device 101 includes two battery cells (e.g., the first battery cell 252 and the second battery cell 254), the electronic device 101 may request a power signal having a voltage twice a voltage of a single battery cell from the charger 290. In the state 430, a voltage of a power signal applied to the first node 202 may be increased to be greater than or equal to the combination of the plurality of battery cells by the charger 290 receiving the request.

In the state 430 of FIG. 4C receiving a power signal having the combination of voltages of the plurality of battery cells from the charger 290, the first switch 310 may be controlled to establish the electrical connection between the first node 202 and the anode 252-1 of the first battery cell 252. Another switch different from the first switch 310, in the state 430, may be controlled to disconnect an electrical connection between the anodes (e.g., the anode 252-1) of the plurality of battery cells and the second node 204. In case that an electric power of the charger 290 is matched, as a voltage of a power signal outputted from the charger 290 increases, a current of the power signal may decrease. A loss (e.g., a line loss) generated when a power signal passes through a conducting wire may be proportional to the current. Since the loss is proportional to the current, the loss generated by the electronic device 101 may be reduced while the electronic device 101 increases the voltage of the power signal outputted from the charger 290 based on the state 430. For example, based on the state 430, the electronic device 101 may charge a plurality of battery cells more efficiently.

In the state 430 of FIG. 4C, protection circuitry 320 connected to the first switch 310 may control the first switch 310 based on a voltage of a power signal transmitted to the switching circuitry 260 through the first switch 310. By the protection circuitry 320, while a plurality of battery cells are charged based on a power signal transmitted through an electrical connection established by the first switch 310, a voltage applied to the plurality of battery cells may be maintained in a preset voltage range. For example, noise (e.g., a surge voltage) of a distribution system may be applied to a concentric plug 294 connected to the charger 290. The noise may cause an abrupt change in a power signal outputted from the charger 290. The protection circuitry 320 may deactivate the first switch 310 based on the abrupt change in the power signal. For example, the protection circuitry 320 may deactivate the first switch 310 based on identifying the power signal having a voltage greater than the preset voltage range having an upper bound that is a combination of maximum values of an operating voltage of the plurality of battery cells.

According to an embodiment, the processor 120 of the electronic device 101, in the state 430, may periodically (e.g., a preset period such as 1 second) identify a voltage V1 and/or a current I1 of the first resistor 272. For example, while charging a plurality of battery cells at high speed based on the state 430, the first resistor 272 may be used to measure a state of the plurality of battery cells. The processor 120 may identify the voltage V1 and/or the current I1 by using the detection circuitry 280. Referring to FIG. 4C, the current I1 may be a current used to charge a plurality of battery cells. According to an embodiment, the processor 120 may adjust a voltage and/or current of the power signal outputted from the charger 290 based on the voltage V1 and/or the current I1. For example, the processor 120 may maintain the current I1 in a preset range by using power data transmitted to the charger 290 based on the PDIC 240. For example, the preset range may be a preset range for charging a plurality of battery cells based on a constant current.

According to an embodiment, the processor 120 of the electronic device 101, in the state 430, may identify whether to change a serial connection of the plurality of battery cells to a parallel connection based on the voltage V1 and/or the current I1 of the first resistor 272. For example, the processor 120 may identify SOCs of the plurality of battery cells and/or the combination of voltages of the plurality of battery cells based on the voltage V1 and/or the current I1. Based on identifying voltages of the plurality of battery cells exceeding a preset voltage and/or the SOCs exceeding a preset SOC, the processor 120 may switch a serial connection of the plurality of battery cells established by the switching circuitry 260 to a parallel connection. As the serial connection of the plurality of battery cells is switched to the parallel connection, a state of the electronic device 101 may be switched from the state 430 of FIG. 4C to the state 420 of FIG. 4B. After switching to the state 420, balancing of the plurality of battery cells may occur. After switching to the state 420, a charge of the plurality of battery cells may be completed.

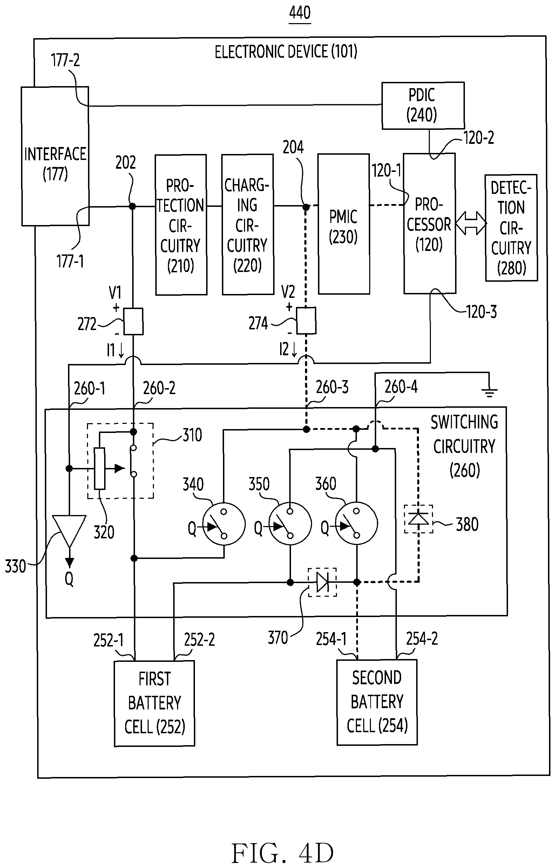

For example, an electrical connection between the electronic device 101 and the charger 290 may be arbitrarily disconnected. As the electrical connection between the electronic device 101 and the charger 290 is disconnected, a state of the electronic device 101 may be switched to the state 410 of FIG. 4A. For example, in the state 420 of FIG. 4B, in case that the electrical connection between the electronic device 101 and the charger 290 is disconnected, the PMIC 230 may obtain a power signal from the plurality of battery cells connected in parallel through the second node 204. For example, switching from the state 420 to the state 410 may be performed while a parallel connection of the plurality of battery cells established by the switching circuitry 260 is maintained. Meanwhile, in the state 430 of FIG. 4C, in case that the electrical connection between the electronic device 101 and the charger 290 is disconnected, the processor 120 may transmit a control signal for establishing the parallel connection of the plurality of battery cells to the switching circuitry 260 to switch to the state 410 of FIG. 4A. The state 440 of FIG. 4D may be an example of a state within a time period after the charger 290 is separated from the interface 177 in the state 430 of FIG. 4C and before the parallel connection of the plurality of battery cells is established by the switching circuitry 260.

Referring to FIG. 4D, as a supply of a power signal through the interface 177 ceases, a flow of a current flowing from the first node 202 to the second end 260-2 of the switching circuitry 260 may cease independently of activation of the first switch 310. As the supply of the power signal ceases, the protection circuitry 210 and the charging circuitry 220 may be deactivated. As the charging circuitry 220 is deactivated, a voltage of the second node 204 may be reduced to a voltage of the second battery cell 254. Since the voltage of the second node 204 decreases, the second diode 380 may be forward biased. For example, a current flow from the anode 254-1 of the second battery cell 254 to the second node 204 through the second diode 380 may occur. Based on the current flowing from the second battery cell 254 to the second node 204, the PMIC 230 may obtain an electric power for driving the processor 120 independently of a cessation of the supply of the power signal through the interface 177. For example, based on the second diode 380, the processor 120 may operate continuously independently of the cessation of the supply of the power signal through the interface 177. For example, based on the second diode 380 and the second battery cell 254 connected through the second diode 380, a voltage drop of the second node 204 may be prevented by a cessation of the supply of the power signal through the interface 177 in the state 430. For example, the voltage of the second node 204 may be maintained to be greater than or equal to the voltage of the second battery cell 254.

In the state 440 of FIG. 4D, the processor 120 may operate by a power signal supplied from the second battery cell 254 through the second node 204. The processor 120 may identify that receiving a power signal from the charger ceases based on the voltage V1 and/or the current I1 of the first resistor 272 identified using the detection circuitry 280. The processor 120 may identify a supply of the power signal by the second battery cell 254 based on the voltage V2 and/or the current I2 of the second resistor 274 identified using the detection circuitry 280. The processor 120 may transmit a control signal for establishing a parallel connection of a plurality of battery cells to the switching circuitry 260 based on identifying the cessation of receiving the power signal and/or the supply of the power signal by the second battery cell 254. The first switch 310 may be deactivated by the control signal. Another switch (e.g., the second switch 340 to the fourth switch 360) different from the first switch 310 may be activated by the control signal. Since the other switch is activated, the state of the electronic device 101 may be switched from the state 440 to the state 410 of FIG. 4A. Since the state 440 is switched to the state 410, the processor 120 may obtain electrical energy from all of the plurality of battery cells.

As described above, according to an embodiment, a state of the electronic device 101 may be switched between the states 410, 420, 430, and 440 based on the processor 120 and/or the switching circuitry 260. For example, the processor 120 may actively adjust a speed of charging the plurality of battery cells based on the states 420 and 430. For example, the switching circuitry 260 may support charging the plurality of battery cells based on a relatively small loss, by adjusting an electrical connection of the plurality of battery cells in each of the states 420 and 430. The switching circuitry 260 may prevent a shutdown of hardware included in the electronic device 101 based on a circuit element such as the second diode 380, in a state (e.g., the state 440) in which the electrical connection of the plurality of battery cells should be abruptly switched.

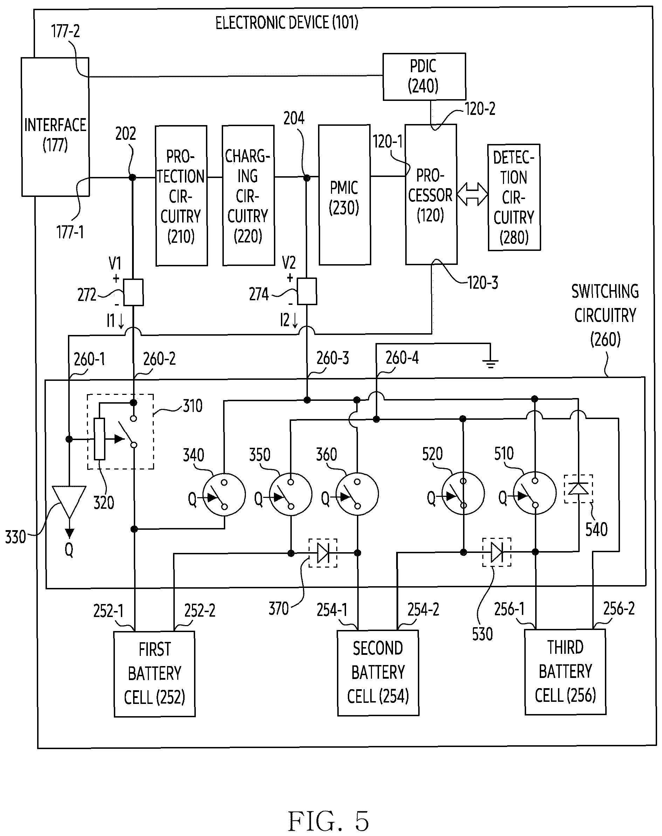

An embodiment of the electronic device 101 including two battery cells (e.g., the first battery cell 252 and the second battery cell 254) is described, but an embodiment is not limited thereto. Hereinafter, an example of the switching circuitry 260 included in the electronic device 101 and for controlling an electrical connection of two or more battery cells will be described with reference to FIG. 5.

FIG. 5 illustrates an example of switching circuitry 260 connected to three battery cells (e.g., a first battery cell 252, a second battery cell 254, and a third battery cell 256) of an electronic device 101 according to an embodiment. The electronic device 101 of FIG. 5 may be an example of the electronic device 101 of FIG. 2. For example, the electronic device 101, the interface 177, the protection circuitry 210, the charging circuitry 220, the PMIC 230, the processor 120, the PDIC 240, the first resistor 272, the second resistor 274, or the detection circuitry 280 of FIG.2 may include the electronic device 101, an interface 177, protection circuitry 210, charging circuitry 220, a PMIC 230, a processor 120, a PDIC 240, a first resistor 272, a second resistor 274, or detection circuitry 280 of FIG. 5.

Referring to FIG. 5, the switching circuitry 260 may control an electrical connection between three battery cells (e.g., the first battery cell 252, the second battery cell 254, and the third battery cell 256). The switching circuitry 260 may include a first end 260-1 for receiving a control signal for adjusting charging speed of a plurality of battery cells. The switching circuitry 260 may include a second end 260-2 for receiving a power signal for charging a plurality of battery cells independently of the charging circuitry 220. The switching circuitry 260 may include a third end 260-2 for discharging a plurality of battery cells and/or charging the plurality of battery cells based on the charging circuitry 220. At least a portion of the switching circuitry 260 of FIG. 5 may be similar to the switching circuitry 260 of FIG. 3A. For example, a first switch 310, protection circuitry 320, a voltage level shifter 330, a second switch 340, a third switch 350, a fourth switch 360, and a first diode 370 in the switching circuitry 260 of FIG. 5 may correspond to the first switch 310, the protection circuitry 320, the voltage level shifter 330, the second switch 340, the third switch 350, the fourth switch 360, and the first diode 370 of FIG. 3A. In order to reduce a repetitive description, a description that overlaps with an above-described drawing including FIG. 3A may be omitted.

Referring to FIG. 5, the switching circuitry 260 in the electronic device 101 according to an embodiment may include a fifth switch 510 for establishing an electrical connection between an anode 256-1 of the third battery cell 256 and a third end 260-3 of the switching circuitry 260. Referring to FIG. 5, the switching circuitry 260 in the electronic device 101 according to an embodiment may include a sixth switch 520 for establishing an electrical connection between a cathode 254-2 of the second battery cell 254 and a fourth end 260-4. The fifth switch 510 to the sixth switch 520 may be controlled by a control signal Q outputted from the voltage level shifter 330, similarly to the second switch 340 to the fourth switch 360. For example, a state of the second switch 340 to the sixth switch 520 may be synchronized by the control signal Q.

Referring to FIG. 5, the switching circuitry 260 in the electronic device 101 according to an embodiment may include a third diode 530 disposed between the cathode 254-2 of the second battery cell 254 and the anode 256-1 of the third battery cell 256. The third diode 530 may include an anode connected to the cathode 254-2 of the second battery cell 254 and a cathode connected to the anode 256-1 of the third battery cell 256. Referring to FIG. 5, the switching circuitry 260 in the electronic device 101 according to an embodiment may include a fourth diode 540 for preventing a shutdown of the processor 120 while a plurality of battery cells are connected in series, such as in the state 440 of FIG. 4D.

Referring to FIGS. 3A and 5, the switching circuitry 260 in the electronic device 101 may have a structure distinguished according to the number of batteries included in the electronic device 101. In an embodiment in which the electronic device 101 includes n batteries, the switching circuitry 260 may include the third end 260-3, and n switches (the second switch 340 and the fourth switch 360 in an embodiment of FIG. 3A, and a second switch 340, a fourth switch 360, and a fifth switch 510 in an embodiment of FIG. 5) for connecting anodes of the n batteries. In an embodiment in which the electronic device 101 includes n batteries, the switching circuitry 260 may include the fourth end 260-4, and n-1 switches (e.g., the third switch 350 in an embodiment of FIG. 3A, the third switch 350 and the sixth switch 520 in an embodiment of FIG. 5) for connecting cathodes of n-1 batteries, excluding a specific battery including a grounded cathode, among the n batteries. In an embodiment in which the electronic device 101 includes n batteries, the switching circuitry 260 may include 2n switches including a first switch (e.g., the first switch 310 of FIG. 3A and/or the first switch 310 of FIG. 5) connected to the second end 260-2, the n switches connected to the third end 260-3, and n-1 switches connected to the fourth end 260-4.

As in the states 410 and 420 of FIG. 4A to FIG. 4B, while a control signal for establishing a parallel connection to the switching circuitry 260 is received, the first switch 310 may be deactivated, and the second switch 340 to the sixth switch 520, excluding the first switch 310, may be activated. For example, in case that the electronic device 101 is in a stand-alone state (e.g., the state 410 of FIG. 4A), the electronic device 101 may obtain electrical energy from a plurality of battery cells connected in parallel based on activation of the second switch 340 to the sixth switch 520. For example, in case that the electronic device 101 is in a state (e.g., the state 420 of FIG. 4B) being connected to a charger different from a PD charger, the electronic device 101 may charge the plurality of battery cells connected in parallel based on activation of the second switch 340 to the sixth switch 520. For example, in case that the electronic device 101 is in a state (e.g., the state 430 of FIG. 4C) being connected to the PD charger, the first switch 310 may be activated, and the second switch 340 to the sixth switch 520, excluding the first switch 310, may be deactivated based on a control signal for establishing a serial connection. The electronic device 101 may charge a plurality of battery cells connected in series, based on an activated first switch 310. In order to charge the plurality of battery cells connected in series, the processor 120 of the electronic device 101 may request a charger (e.g., the charger 290 of FIG. 2) to transmit a power signal greater than or equal to a combination of voltages of the first battery cell 252 to the third battery cell 256 by using the PDIC 240.

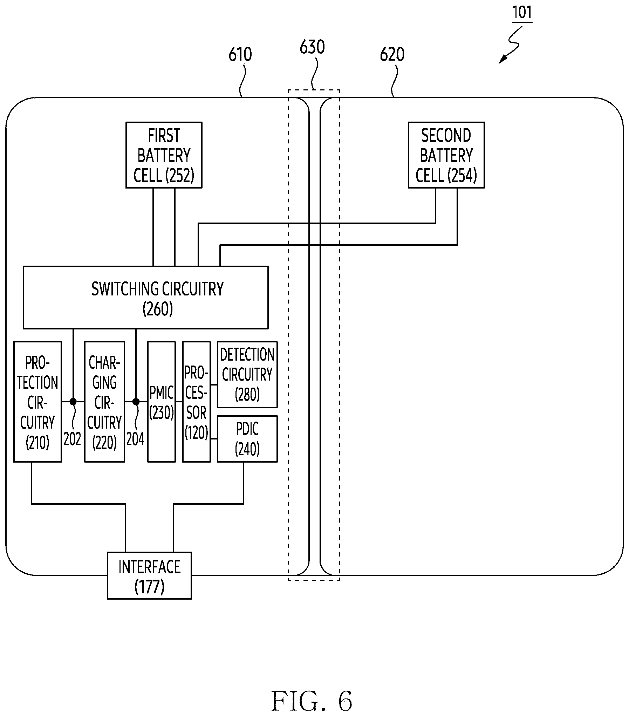

The switching circuitry 260 described above with reference to FIG. 2 to FIG. 5 may be disposed on a printed circuit board (PCB) on which the processor 120 is disposed, or may be disposed on another PCB different from the PCB. The plurality of battery cells described above with reference to FIG. 2 to FIG. 5 may be integrated in one or more battery packs. The switching circuitry 260 may be included in the one or more battery packs. An embodiment is not limited thereto. Hereinafter, an example of a structure of the switching circuitry 260 and the plurality of battery cells dependent on a form factor of the electronic device 101 will be described with reference to FIG. 6.

FIG. 6 illustrates an example of a plurality of battery cells (e.g., a first battery cell 252 and a second battery cell 254) disposed in a deformable housing of an electronic device 101 according to an embodiment, and one or more circuitry connected to the plurality of battery cells. The electronic device 101 of FIG. 6 may be an example of the electronic device 101 of FIG. 1 to FIG. 2. For example, the electronic device 101, the interface 177, the protection circuitry 210, the charging circuitry 220, the PMIC 230, the processor 120, the PDIC 240, the switching circuitry 260, the first resistor 272, the second resistor 274, or the detection circuitry 280 of FIG. 2 may include the electronic device 101, an interface 177, protection circuitry 210, charging circuitry 220, a PMIC 230, a processor 120, a PDIC 240, switching circuitry 260, a first resistor 272, a second resistor 274, or detection circuitry 280 of FIG. 6. The switching circuitry 260 of FIG. 6, similarly to the switching circuitry 260 of FIG. 3A, may control an electrical connection between two battery cells (e.g., the first battery cell 252 and the second battery cell 254).

Referring to FIG. 6, the electronic device 101 according to an embodiment may include the deformable housing. The housing may include a first sub-housing 610, a second sub-housing 620, and a hinge assembly 630 rotatably coupling the first sub-housing 610 and the second sub-housing 620. Although not illustrated, the electronic device 101 may include a flexible display disposed across the first sub-housing 610 and the second sub-housing 620.

Referring to FIG. 6, a plurality of battery cells included in the electronic device 101 may be disposed in each of the first sub-housing 610 and the second sub-housing 620. In an embodiment of FIG. 6, in which hardware (e.g., the interface 177, the protection circuitry 210, the charging circuitry 220, the PMIC 230, the processor 120, the PDIC 240, the switching circuitry 260, the first resistor 272, the second resistor 274, the detection circuitry 280, and the first battery cell 252) excluding the second battery cell 254 is included in the first sub-housing 610, the second battery cell 254 may be connected to the switching circuitry 260 through a flexible PCB (FPCB) passing through the hinge assembly 630. The first battery cell 252 and the second battery cell 254 may be packaged in different battery packs.

FIG. 7 illustrates an example of a flowchart for describing an operation performed by an electronic device based on switching circuitry, according to an embodiment. The electronic device and the switching circuitry of FIG. 7 may be an example of the electronic device 101 of FIG. 1 to FIG. 6 and the switching circuitry 260 of FIG. 2 to FIG. 6. At least one of operations of FIG. 7 may be performed by the electronic device 101 of FIG. 1 to FIG. 6 and/or a processor (e.g., the processor 120 of FIG. 1 to FIG. 2, FIG. 4A to FIG. 4D, and/or FIG. 5 to FIG. 6) of the electronic device 101.

Referring to FIG. 7, in an operation 710, the electronic device according to an embodiment may identify a charger (e.g., the charger 290 of FIG. 2 and FIG. 4B to FIG. 4C) connected to the electronic device through an interface (e.g., the interface 177 of FIG. 1 to FIG. 2, FIG. 4A to FIG. 4D, and/or FIG. 6). For example, in the state 410 of FIG. 4A, the electronic device may perform the operation 710. Before identifying the charger, a plurality of battery cells (e.g., the battery cells 250 of FIG. 2, the first battery cell 252 and the second battery cell 254 of FIG. 3A, FIG. 4A to FIG. 4D, and FIG. 6 and/or the first battery cell 252 to third battery cell 256 of FIG. 5) in the electronic device may be connected in parallel.

Referring to FIG. 7, in an operation 720, the electronic device according to an embodiment may charge a plurality of battery cells based on a parallel connection of the plurality of battery cells. Charging the plurality of battery cells by the electronic device based on the operation 720 may be associated with the state 420 of FIG. 4B.

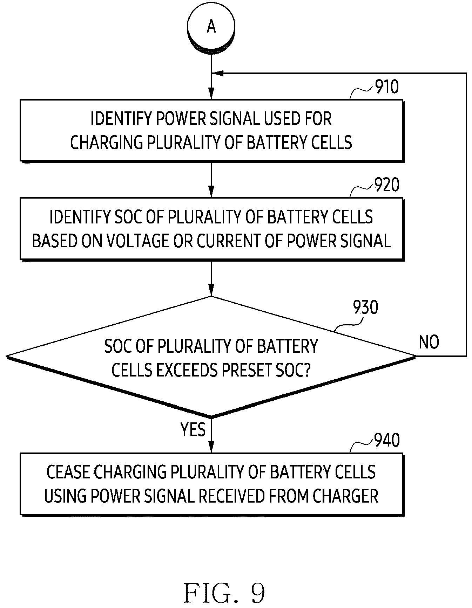

Referring to FIG. 7, in an operation 730, the electronic device according to an embodiment may identify whether a charger supports exchange of power data. The electronic device may identify a type of a charger based on a connection between the electronic device and the charger. The electronic device may communicate with a charger through a preset channel included in an interface. The electronic device may include circuitry (e.g., the PDIC 240 of FIG. 2, FIG. 4A to FIG. 4D, and/or FIG. 5 to FIG. 6) to communicate with a charger. In case that the charger supports an APDO function, a charger may transmit a signal indicating that an exchange of the power data is supported to the electronic device. In response to identifying that a charger does not support an exchange of power data (730-No), the electronic device may perform at least one of the operations of FIG. 9. For example, in case that a charger is a different charger of a preset type that supports an exchange of power data, the electronic device may maintain a parallel connection of a plurality of battery cells.

In response to identifying that a charger supports an exchange of power data (730-Yes), in an operation 740, the electronic device according to an embodiment may measure voltages of a plurality of battery cells. The electronic device may include circuitry (e.g., the detection circuitry 280, the first resistor 272, and/or the second resistor 274 of FIG. 2, FIG. 3B, FIG. 4A to FIG. 4D, and/or FIG. 5) for measuring the voltages of the plurality of battery cells.

In an operation 750, the electronic device according to an embodiment may determine whether a combination of measured voltages exceeds a preset voltage. The preset voltage may be associated with voltages and/or SOCs of battery cells suitable for establishing a serial connection of a plurality of battery cells. In case that the combination of the measured voltages is less than or equal to the preset voltage (750-No), the electronic device may maintain the parallel connection of the plurality of battery cells based on operations 740 and 750. While the parallel connection is maintained, the electronic device may charge the plurality of battery cells by using a charger. Maintaining the parallel connection based on the operations 740 and 750 may be associated with the state 420 of FIG. 4B. As the plurality of battery cells are charged based on the parallel connection, the voltages of the plurality of battery cells may increase to a lower bound of a voltage required for fast charging (or charging of the plurality of battery cells based on the serial connection of the plurality of battery cells).

In case that a combination of the measured voltages exceeds the preset voltage (750-Yes), in an operation 760, the electronic device according to an embodiment may transmit power data to a charger for requesting a power signal having the combination of the measured voltages as a voltage. The power data may include a value multiplied by the voltage of the battery cell measured based on the operation 740 and the number of battery cells included in the electronic device.

Referring to FIG. 7, in an operation 770, the electronic device according to an embodiment may establish a serial connection of a plurality of battery cells by controlling switching circuitry (e.g., the switching circuitry 260 of FIG. 2, FIG. 3A, FIG. 4A to FIG. 4D, and/or FIG. 5 to FIG. 6). For example, the electronic device may transmit a control signal for establishing a serial connection of battery cells to the switching circuitry 260. Since the serial connection is established by switching circuitry, a state of the switching circuitry may be switched to the state 430 of FIG. 4C. Based on the operation 770, among switches included in the switching circuitry, a first switch (e.g., the first switch 310 of FIG. 3A, FIG. 4A to FIG. 4D, and/or FIG. 5) connected to an anode of a specific battery cell (e.g., the first battery cell 252 of FIG. 3A, FIG. 4A to FIG. 4D, FIG. 5, and/or FIG. 6) may be activated. Among the switches, another switch different from the first switch may be deactivated. For example, switches connected to anodes of each of the plurality of battery cells may be deactivated.

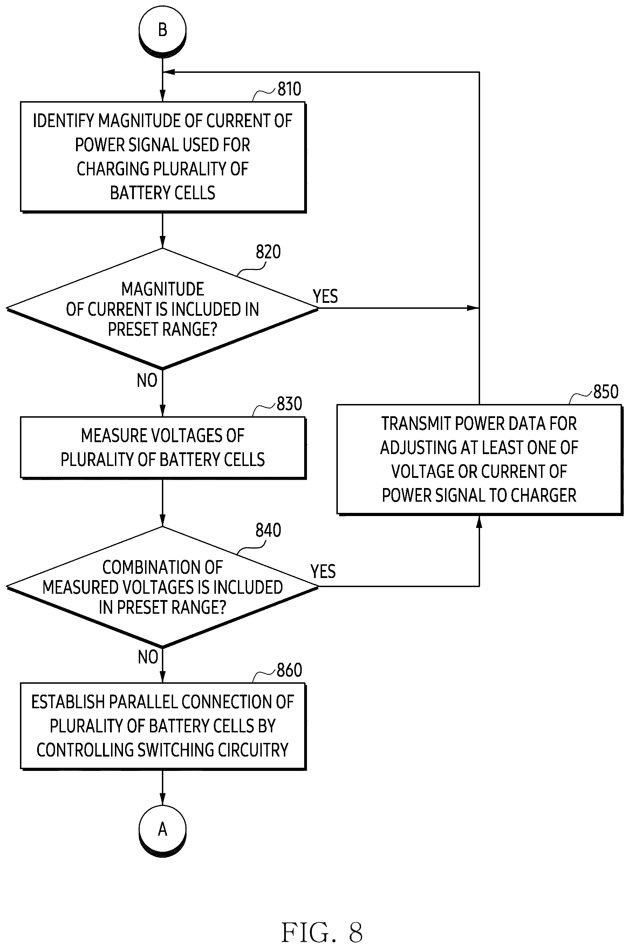

Referring to the operations 730 and 770 of FIG. 7, the electronic device may establish a serial connection of a plurality of battery cells at least based on identifying a preset type of a charger supporting an exchange of power data. Hereinafter, one or more operations performed by the electronic device will be described based on the establishment of the serial connection of operation 770, with reference to FIG. 8.

FIG. 8 illustrates an example of a flowchart for describing an operation performed by an electronic device based on switching circuitry, according to an embodiment. The electronic device and the switching circuitry of FIG. 8 may be an example of the electronic device 101 of FIG. 1 to FIG. 6 and the switching circuitry 260 of FIG. 2 to FIG. 6. At least one of operations of FIG. 8 may be performed by the electronic device 101 of FIG. 1 to FIG. 6 and/or a processor (e.g., the processor 120 of FIG. 1 to FIG. 2, FIG. 4A to FIG. 4D, and/or FIG. 5 to FIG. 6) of the electronic device 101. An operation of FIG. 8 may be performed based on the operation 770 of FIG. 7. At least one of the operations of FIG. 8 may be performed in the state 430 of FIG. 4C. For example, at least one of the operations of FIG. 8 may be performed while a plurality of battery cells are charged based on a serial connection.

Referring to FIG. 8, in an operation 810, the electronic device according to an embodiment may identify magnitude of a current of a power signal used for charging a plurality of battery cells. The electronic device may identify the magnitude of the current of the power signal based on a voltage and/or a current of a preset node (e.g., the first node 202 of FIG. 2, FIG. 3B, FIG. 4A to FIG. 4D, and/or FIG. 5). For example, the electronic device may identify magnitude of a current applied to a plurality of battery cells.

Referring to FIG. 8, in an operation 820, the electronic device according to an embodiment may determine whether the magnitude of the current in the operation 810 is included in a preset range. The preset range may be determined to charge a plurality of battery cells based on a constant current. A preset range may be determined based on voltages of a plurality of battery cells. While magnitude of a current is included in a preset range (820-Yes), the electronic device may identify the magnitude of the current based on the operation 810.

In response to identifying magnitude of a current different from a preset range (820-No), in an operation 830, the electronic device according to an embodiment may measure voltages of a plurality of battery cells. The electronic device may perform the operation 830 similar to the operation 740 of FIG. 7.

Referring to FIG. 8, in an operation 840, the electronic device according to an embodiment may determine whether a combination of the voltages measured based on the operation 830 is included in a preset range. The preset range may have an upper bound for preventing overcharging of a plurality of battery cells.

In case that the combination of the voltages is included in the preset range (840-Yes), in an operation 850, the electronic device according to an embodiment may transmit power data for adjusting at least one of a voltage and a current of a power signal to a charger. For example, the electronic device may transmit the power data to a charger to adjust the magnitude of the current identified based on the operation 810 outputted from the charger in the preset range of the operation 820. For example, in case that the magnitude of the current in the operation 810 exceeds the preset range, the electronic device may transmit the power data to lower a voltage of a power signal outputted from a charger to the charger. For example, in case that the magnitude of the current in the operation 810 is less than the preset range, the electronic device may transmit the power data to increase the voltage of the power signal outputted from the charger to the charger. The power data transmitted to the charger based on the operation 850 may be associated with the combination of the voltages of the plurality of battery cells in the operation 830.

In a case of identifying the combination of the voltages different from the preset range (840-No), in an operation 860, the electronic device according to an embodiment may establish a parallel connection of a plurality of battery cells by controlling the switching circuitry. For example, the electronic device may transmit a control signal for establishing a parallel connection of a plurality of battery cells to the switching circuitry. Since the parallel connection is established by the switching circuitry, a state of the switching circuitry may be switched from the state 430 of FIG. 4C to the state 420 of FIG. 4B. Based on the operation 860, among switches included in the switching circuitry, a first switch connected to the anode of the specific battery cell of the operation 770 may be deactivated. Among the switches, another switch different from the first switch may be activated. After the parallel connection is established based on the operation 860, the electronic device may charge a plurality of battery cells by using charging circuitry (e.g., the charging circuitry 220 of FIG. 2, and FIG. 4B to FIG. 4C). The charging circuitry may output a constant voltage for charging the plurality of battery cells.

Hereinafter, referring to FIG. 8, one or more operations performed by the electronic device will be described based on the establishment of the parallel connection of the operation 860.

FIG. 9 illustrates an example of a flowchart for describing an operation performed by an electronic device based on switching circuitry, according to an embodiment. The electronic device and the switching circuitry of FIG. 9 may be an example of the electronic device 101 of FIG. 1 to FIG. 6 and the switching circuitry 260 of FIG. 2 to FIG. 6. At least one of operations of FIG. 9 may be performed by the electronic device 101 of FIG. 1 to FIG. 6 and/or a processor (e.g., the processor 120 of FIG. 1 to FIG. 2, FIG. 4A to FIG. 4D, and/or FIG. 5 to FIG. 6) of the electronic device 101. An operation of FIG. 9 may be performed based on the operation 860 of FIG. 8, or may be performed based on a charger that does not support an exchange of power data being connected to the electronic device (the operation 730-No). At least one of the operations of FIG. 9 may be performed in the state 420 of FIG. 4B.

Referring to FIG. 9, in an operation 910, the electronic device according to an embodiment may identify a power signal used for charging a plurality of battery cells. Similar to the operation 740, the electronic device may identify the power signal by using detection circuitry (e.g., the detection circuitry 280 of FIG. 2, FIG. 3B, FIG. 4A to FIG. 4D, and/or FIG. 5). The power signal may be transmitted to the switching circuitry 260 through the second node 204 of FIG. 2.

Referring to FIG. 9, in an operation 920, the electronic device according to an embodiment may identify an SOC of a plurality of battery cells based on a voltage or a current of a power signal. Referring to FIG. 9, in an operation 930, the electronic device according to an embodiment may determine whether the SOC of the plurality of battery cells exceeds a preset SOC. The preset SOC may be determined to complete and/or end charging of the plurality of battery cells. The preset SOC may correspond to a maximum value of voltages of a plurality of battery cells. While the SOC of the plurality of battery cells is less than or equal to the preset SOC (930-No), the electronic device may monitor the SOC based on the operations 910, 920, and 930. While the operations 910, 920, 930, and 940 are performed, a plurality of battery cells may be charged based on a parallel connection. While the plurality of battery cells are charged based on the parallel connection, the SOC of the plurality of battery cells may gradually increase.

Based on identifying that the SOC of the plurality of battery cells exceeds the preset SOC (930-Yes), in an operation 940, the electronic device according to an embodiment may cease charging the plurality of battery cells using a power signal received from a charger. Based on the operation 940, the electronic device may complete charging of the plurality of battery cells.

As described above, an electronic device according to an embodiment may include switching circuitry for switching an electrical connection of a plurality of battery cells among a serial connection or a parallel connection. A processor of the electronic device may generate a control signal for controlling the switching circuitry based on a type of a charger connected to the electronic device and/or a state of charge of the plurality of battery cells. In a state in which a parallel connection of a plurality of battery cells is established by the switching circuitry, the plurality of battery cells may receive a power signal transmitted from a charger controlled by the electronic device independently of circuitry (e.g., the charging circuitry 220 of FIG. 2) for adjusting a voltage of the power signal in the electronic device. For example, in the state, the plurality of battery cells may directly receive the power signal of the charger. Since the plurality of battery cells directly receive the power signal of the charger, fast charging of the plurality of battery cells may be supported without separate circuitry for charging the plurality of battery cells relatively quickly.

A method for more quickly charging a plurality of battery cells included in an electronic device using a charger controlled based on the electronic device may be required.

As described above, according to an embodiment, an electronic device (e.g., the electronic device 101 of FIG. 2) may comprise an interface (e.g., the interface 177 of FIG. 2) to be connected to a charger (e.g., the charger 290 of FIG. 2), charging circuitry (e.g., the charging circuitry 220) connected to the interface through a first node (e.g., the first node 202 of FIG. 2), a power management integrated circuit (PMIC) (e.g., the PMIC 230 of FIG. 2) connected to the charging circuitry through a second node (e.g., the second node 204 of FIG. 2) different from the first node, a processor (e.g., the processor 120 of FIG. 2) driven by a power provided from the PMIC, a plurality of battery cells (e.g., the battery cells 250 of FIG. 2), and switching circuitry (e.g., the switching circuitry 260 of FIG. 2), which is connected to the first node and the second node, to control an electrical connection of the plurality of the battery cells. The switching circuitry may comprise a first switch (e.g., the first switch 310 of FIG. 3A) to establish an electrical connection between the first node, and an anode (e.g., the anode 252-1 of FIG. 3A) of a first battery cell (e.g., the first battery cell 252 of FIG. 3A) among the plurality of battery cells, based on a control signal received from the processor. The switching circuitry may comprise a diode (e.g., the first diode 370 of FIG. 3A) including an anode connected to a cathode (e.g., the cathode 252-2 of FIG. 3A) of the first battery cell, and a cathode connected to an anode (e.g., the anode 254-2 of FIG. 3A) of a second battery cell (e.g., the second battery cell 254 of FIG. 3A) among the plurality of battery cells. The switching circuitry may comprise a second switch (e.g., the second switch 340 of FIG. 3A) to establish an electrical connection between the second node, and the anode of the first battery cell, in another state (e.g., the state 410 of FIG. 4A and/or the state 420 of FIG. 4B) different from a state (e.g., the state 430 of FIG. 4C and/or the state 440 of FIG. 4D) where the electrical connection of the first switch is established by the control signal. According to an embodiment, the electronic device may charge a plurality of battery cells more quickly by using a charger controlled based on the electronic device.

For example, the switching circuitry may comprise a third switch (e.g., the third switch 350 of FIG. 3A) to make the cathode of the first battery cell be grounded in the another state. The switching circuitry may comprise a fourth switch (e.g., the fourth switch 360 of FIG. 3A) to establish an electrical connection between the anode of the second battery cell, and the second node, in the another state.

For example, the processor may be configured to transmit, in the state, the control signal to establish a serial connection of the plurality of battery cells based on the electrical connection of the first switch, and the diode, to the switching circuitry.

For example, the processor may be configured to transmit, in the another state, the control signal to establish a parallel connection of the plurality of battery cells based on the electrical connection of the second switch, the cathode of the first battery cell which is grounded by the third switch, and the electrical connection of the fourth switch, to the switching circuitry.

For example, the switching circuitry may comprise a second diode (e.g., the second diode 380 of FIG. 3A), that is different from the diode, which is a first diode, including an anode connected to the anode of the second battery cell, and a cathode connected to the second node.

For example, the processor may be configured to increase a voltage of the second node to be greater than or equal to a voltage of the anode of the second battery cell by controlling the charging circuitry to make the second diode to be reverse biased in the state.

For example, the processor may be configured to at least temporarily receive, while providing of a power signal by a charger is ceased in the state, a power of the second battery cell through the second diode.

For example, the processor may be configured to transmit, to the switching circuitry, the control signal to translate from the state to the another state while receiving a power of the second battery cell through the second diode.

For example, the switching circuitry may comprise protection circuitry (e.g., the protection circuitry 320 of FIG. 3A) to adjust, while charging a plurality of battery cells based on a power signal transmitted through the electrical connection of the first switch in the state, a voltage applied to the plurality of battery cells based on a preset voltage range, by being connected to the first switch.

For example, the protection circuitry may be configured to disconnect the electrical connection of the first switch based on identifying that a voltage greater than the preset voltage range is applied to the plurality of battery cells.

For example, the processor may be configured to transmit, to the switching circuitry, the control signal to establish the electrical connection of the first switch, based on identifying the charger of a first type supporting exchanging of power data to adjust a voltage of a power signal, the charger being electrically connected to the interface.

For example, the electronic device may further comprise a resistor (e.g., the first resistor 272 of FIG. 2) including an end connected to the first node, and another end connected to the first switch, and detection circuitry (e.g., the detection circuitry 280 of FIG. 2) to identify a current of the resistor. The processor may be configured to transmit, to the charger through the interface, power data to maintain the current identified using the detection circuitry as a preset current while the electrical connection of the first switch is established based on identifying the charger of the first type.

For example, the processor may be configured to identify, while the electrical connection of the first switch is established based on identifying the charger of the first type, a size of a voltage applied to the plurality of battery cells. The processor may be configured to enter, based on identifying the size different from a preset range associated with the state, from the state to the another state based on the control signal.

For example, the plurality of battery cells may be charged based on a power signal having a current within a preset range from the charger in the state. The plurality of battery cells may be charged based on a power signal having a voltage within a preset range from the charger in the another state.

For example, the another state may comprise a state after the charger is separated from the interface.

As described above, according to an embodiment, an electronic device (e.g., the electronic device 101 of FIG. 2) may comprise charging circuitry (e.g., the charging circuitry 220) receiving a power signal from a charger (e.g., the charger 290 of FIG. 2) different from the electronic device through a first node (e.g., the first node 202 of FIG. 2), a power management integrated circuit (PMIC) (e.g., the PMIC 230 of FIG. 2) connected to the charging circuitry through a second node (e.g., the second node 204 of FIG. 2) different from the first node, a plurality of battery cells (e.g., the battery cells 250 of FIG. 2), and switching circuitry (e.g., the switching circuitry 260 of FIG. 2), which is connected to the first node and the second node, to control an electrical connection of the plurality of the battery cells. The switching circuitry may comprise a first switch (e.g., the first switch 310 of FIG. 3A) disposed between the first node, and an anode (e.g., the anode 252-1 of FIG. 3A) of a first battery cell (e.g., the first battery cell 252 of FIG. 3A) among the plurality of battery cells, a plurality of second switches (e.g., the second switch 340 and/or the fourth switch 360 of FIG. 3A) disposed between the second node, and anodes of the plurality of battery cells, and at least one diode (e.g., the first diode 370 of FIG. 3A) connected to the plurality of battery cells, for sequential transmission of the power signal in the plurality of battery cells that is transmitted to the first battery cell through the first switch.

For example, the first switch may be controlled to establish an electrical connection between the first node and the anode of the first battery cell in a state receiving the power signal having a combination of voltages of the plurality of battery cells.

For example, the plurality of second switches may be controlled to disconnect an electrical connection between the anodes of the plurality of battery cells, and the second node in the state.

For example, the at least one diode may comprise a diode including an anode connected to a cathode of the first battery cell, and a cathode connected to an anode of a second battery cell different from the first battery cell.

For example, the electronic device may further comprise a processor to control, based on at least one of a connection between the electronic device and the charger, or a type of the charger, the first switch and the plurality of second switches.

For example, the electronic device may include at least one third switch disposed between at least one cathode of the plurality of battery cells and a ground node and synchronized with the plurality of second switches.

As described above, according to an embodiment, a method of an electronic device may comprise, based on a connection between the electronic device and a charger, identifying a type of the charger. The method may comprise, based on identifying the charger of a preset type supporting an exchange of power data, establishing a serial connection of a plurality of battery cells in the electronic device. The method may comprise, in a state in which the serial connection is established, transmitting the power data including a combination of voltages of the plurality of battery cells to the charger. The method may comprise, based on receiving a power signal having a voltage corresponding to the combination from the charger based on the power data, transmitting the power signal to the plurality of battery cells. The method may comprise, based on identification of another charger different from the preset type, establishing a parallel connection of the plurality of battery cells.

For example, the identifying may include communicating with the charger through a preset channel included in an interface connecting the electronic device and the charger.

For example, the establishing the serial connection may include activating a first switch connected to an anode of a first battery cell among the plurality of battery cells. The establishing the serial connection may include deactivating a plurality of second switches different from the first switch and connected to anodes of each of the plurality of battery cells.

For example, the establishing the parallel connection may include deactivating the first switch. The establishing the parallel connection may include activating the plurality of second switches.

For example, the transmitting the power signal to the plurality of battery cells may include transmitting the power signal to a first battery cell among the plurality of battery cells through a preset node between charging circuitry in the electronic device and the charger, for controlling charging of the plurality of battery cells by the other charger.

For example, the transmitting the power data may include identifying magnitude of a current applied to the plurality of battery cells. The transmitting the power data may include transmitting the power data indicating to increase the voltage of the power signal to the charger, based on identifying the magnitude different from a preset range.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101) comprising:
an interface (177) to be connected to a charger (290);
charging circuitry (220) connected to the interface through a first node (202);
a power management integrated circuit (PMIC) (230) connected to the charging circuitry through a second node (204) different from the first node;
a processor (120) driven by a power provided from the PMIC;
a plurality of battery cells (250); and
switching circuitry (260) to control an electrical connection of the plurality of the battery cells, and is connected to the first node, and the second node; and
wherein the switching circuitry comprising:
a first switch (310) to establish an electrical connection between the first node, and an anode (252-1) of a first battery cell (252) among the plurality of battery cells, based on a control signal received from the processor;
a diode (370) including an anode connected to a cathode (252-2) of the first battery cell, and a cathode connected to an anode (254-1) of a second battery cell (254) among the plurality of battery cells; and
a second switch (340) to establish an electrical connection between the second node, and the anode of the first battery cell, in another state (410; 420) different from a state (430;440) where the electrical connection of the first switch is established by the control signal.

2. The electronic device of claim 1, wherein the switching circuitry comprising,
a third switch (350) to make the cathode of the first battery cell be grounded in the another state; and
a fourth switch (360) to establish an electrical connection between the anode of the second battery cell, and the second node, in the another state.

3. The electronic device of any one of preceding claims, wherein the processor is configured to,
transmit, in the state, the control signal to establish a serial connection of the plurality of battery cells based on the electrical connection of the first switch, and the diode, to the switching circuitry.

4. The electronic device of any one of preceding claims, wherein the processor is configured to,
transmit, in the another state, the control signal to establish a parallel connection of the plurality of battery cells based on the electrical connection of the second switch, the cathode of the first battery cell which is grounded by the third switch, and the electrical connection of the fourth switch, to the switching circuitry.

5. The electronic device of any one of preceding claims, wherein the switching circuitry comprising,
a second diode (380), that is different from the diode which is a first diode, including an anode connected to the anode of the second battery cell, and a cathode connected to the second node.

6. The electronic device of any one of preceding claims, wherein the processor is configured to,
increase a voltage of the second node to be greater than or equal to a voltage of the anode of the second battery cell by controlling the charging circuitry to make the second diode to be reverse biased in the state.

7. The electronic device of any one of preceding claims, wherein the processor is configured to,
at least temporarily receive, while providing of a power signal by a charger is ceased in the state, a power of the second battery cell through the second diode.

8. The electronic device of any one of preceding claims, wherein the processor is configured to,
transmit, to the switching circuitry, the control signal to translate from the state to the another state while receiving a power of the second battery cell through the second diode.

9. The electronic device of any one of preceding claims, wherein the switching circuitry comprising,
protection circuitry (320) to adjust, while charging the plurality of battery cells based on a power signal transmitted through the electrical connection of the first switch in the state, a voltage applied to the plurality of battery cells based on a preset voltage range, by being connected to the first switch.

10. The electronic device of any one of preceding claims, wherein the protection circuitry is configured to,
disconnect the electrical connection of the first switch based on identifying that a voltage greater than the preset voltage range is applied to the plurality of battery cells.

11. The electronic device of any one of preceding claims, wherein the processor is configured to,
transmit, to the switching circuitry, the control signal to establish the electrical connection of the first switch, based on identifying the charger of a first type supporting exchanging of power data to adjust a voltage of a power signal, the charger being electrically connected to the interface.

12. The electronic device of any one of preceding claims, further comprising,
a resistor (272) including an end connected to the first node, and another end connected to the first switch; and
detection circuitry (280) to identify a current of the resistor, and
wherein the processor is configured to,
transmit, to the charger through the interface, power data to maintain the current identified using the detection circuitry as a preset current while the electrical connection of the first switch is established based on identifying the charger of the first type.

13. The electronic device of any one of preceding claims, wherein the processor is configured to,
identify, while the electrical connection of the first switch is established based on identifying the charger of the first type, a size of a voltage applied to the plurality of battery cells; and
enter, based on identifying the size different from a preset range associated with the state, from the state to the another state based on the control signal.

14. The electronic device of any one of preceding claims, wherein the plurality of battery cells are charged based on a power signal having a current within a preset range from the charger in the state; and
the plurality of battery cells are charged based on a power signal having a voltage within a preset range from the charger in the another state.

15. The electronic device of any one of preceding claims, wherein the another state comprising a state after the charger is separated from the interface.
